# EUROPEAN PATENT APPLICATION

(11) **EP 4 693 956 A1**
(43) Date of publication of application: **11.02.2026**
(21) Application number: 24796336.6
(22) Date of filing: 06.05.2024
(51) Int. Cl.: H04B 10/80, H04Q 11/00

(54) **METHOD FOR DETERMINING OPERATION STATE, AND COMMUNICATION APPARATUS AND STORAGE MEDIUM**

(30) Priority: 24.04.2023 CN 202310472263
(71) Applicant: Huawei Technologies Co., Ltd., Shenzhen, Guangdong 518129 (CN)
(72) Inventor: XU, Xiaodong, Shenzhen, Guangdong 518129 (CN)
(74) Representative: Epping - Hermann - Fischer
(86) International application number: PCT/CN2024/091130
(87) International publication number: WO 2024/222967

(57) **Abstract**

A method for determining a running state, a communication apparatus, and a storage medium are disclosed, and belong to the field of optical communication technologies. In the method, in response to a current time point being a start time point of a first energy-saving time period, a first communication apparatus sets a first sending apparatus to be in a first running state according to a first energy-saving policy, so that link bandwidth between the first sending apparatus and a second receiving apparatus is first link bandwidth. The first sending apparatus and the second receiving apparatus are interconnected through an optical fiber, and both the first sending apparatus and the second receiving apparatus are configured to perform medium access control MAC layer and physical layer processing on data. Therefore, in embodiments of this application, running states of related components at a MAC layer and a physical layer of the first communication apparatus may be set, to implement an energy-saving policy by adjusting the link bandwidth, so that power consumption of the first communication apparatus is reduced.

## Description

This application claims priority to Chinese Patent Application No. 202310472263.1, filed with the China National Intellectual Property Administration on April 24, 2023 and entitled "METHOD FOR DETERMINING RUNNING STATE, COMMUNICATION APPARATUS, AND STORAGE MEDIUM", which is incorporated herein by reference in its entirety.

### TECHNICAL FIELD

Embodiments of this application relate to the field of optical communication technologies, and in particular, to a method for determining a running state, a communication apparatus, and a storage medium.

### BACKGROUND

Different communication apparatuses in a communication system may be interconnected through an optical fiber to perform data transmission. In a scenario in which the communication apparatuses are interconnected through the optical fiber, how to set a running state of the communication apparatus to reduce power consumption of the communication apparatus is a current research hotspot.

### SUMMARY

Embodiments of this application provide a method for determining a running state, a communication apparatus, and a storage medium, to reduce power consumption of the communication apparatus by reducing link bandwidth during normal communication of the communication apparatus. Technical solutions are as follows.

According to a first aspect, a method for determining a running state is provided. The method is applied to a communication system, the communication system includes a first communication apparatus and a second communication apparatus, the first communication apparatus includes a first sending apparatus, the second communication apparatus includes a second receiving apparatus, the first sending apparatus and the second receiving apparatus are interconnected through an optical fiber, and both the first sending apparatus and the second receiving apparatus are configured to perform medium access control MAC layer and physical layer processing on data.

In the method, in response to a current time point being a start time point of a first energy-saving time period, the first communication apparatus sets the first sending apparatus to be in a first running state according to a first energy-saving policy, where when the first sending apparatus is in the first running state, link bandwidth between the first sending apparatus and the second receiving apparatus is first link bandwidth, and the first energy-saving policy includes the first energy-saving time period and the first link bandwidth.

In this embodiment of this application, running states of related components at a MAC layer and a physical layer of the first communication apparatus are set, to implement an energy-saving policy by adjusting the link bandwidth, so that power consumption of the first communication apparatus is reduced. In addition, the running states of the related components at the MAC layer and the physical layer of the first communication apparatus are set, so that energy can be saved from two dimensions at the MAC layer and the physical layer of the first communication apparatus, and an energy-saving effect is clearer.

According to the method provided in the first aspect, in a possible implementation, before the first communication apparatus switches the first sending apparatus from a current running state to the first running state, the first communication apparatus obtains first running parameter adjustment information corresponding to the first link bandwidth; and the first communication apparatus sends the first energy-saving time period and the first running parameter adjustment information to the second communication apparatus.

After obtaining the first energy-saving policy for the first sending apparatus, the first communication apparatus may further obtain the first running parameter adjustment information corresponding to the first link bandwidth. In addition, the first communication apparatus sends the first energy-saving time period and the first running parameter adjustment information to the second communication apparatus, so that the second communication apparatus also runs according to the first energy-saving policy within the first energy-saving time period, to reduce power consumption of the second communication apparatus.

According to the method provided in the first aspect, in a possible implementation, the first sending apparatus includes a plurality of channels. In this scenario, the first running parameter adjustment information includes sleep channel information.

For example, the sleep channel information indicates a sleep channel in the plurality of channels in the first running state.

The energy-saving policy provided in this embodiment of this application may be implemented by sleeping one or more channels in the plurality of channels. This energy-saving policy does not need a complex operation, and therefore is easy to be implemented.

According to the method provided in the first aspect, in a possible implementation, the first communication apparatus may send the first energy-saving time period and the first running parameter adjustment information to the second communication apparatus in the following implementation: generating an energy-saving negotiation packet, where the energy-saving negotiation packet carries the first energy-saving time period and the first running parameter adjustment information; and sending the energy-saving negotiation packet to the second receiving apparatus.

The foregoing manner may be referred to as an out-of-band manner. The out-of-band manner may be understood as that a processor of the first communication apparatus independently generates the energy-saving negotiation packet including the first energy-saving time period and the first running parameter adjustment information, and the energy-saving negotiation packet is a packet different from a service packet normally sent by the first sending apparatus. Therefore, this manner is referred to as the out-of-band manner. The first energy-saving time period and the first running parameter adjustment information are transferred in the out-of-band manner, so that a process of negotiating link bandwidth between the first communication apparatus and the second communication apparatus can be more flexible.

According to the method provided in the first aspect, in a possible implementation, the first communication apparatus may send the first energy-saving time period and the first running parameter adjustment information to the second communication apparatus in the following implementation: The first sending apparatus receives a to-be-sent Ethernet frame; the first sending apparatus performs MAC layer and physical layer processing on the Ethernet frame, and adds the first energy-saving time period and the first running parameter adjustment information to a reference field of a processed packet; and the first sending apparatus sends the processed packet to the second receiving apparatus.

The foregoing manner may be referred to as an in-band manner. The in-band manner may be understood as that the first sending apparatus of the first communication apparatus adds the first energy-saving time period and the first running parameter adjustment information to a packet when performing MAC layer or physical layer processing on the packet. It is equivalent to that the first energy-saving time period and the first running parameter adjustment information are carried by a service packet normally sent by the first sending apparatus. Therefore, this manner is referred to as the in-band manner. The first energy-saving time period and the first running parameter adjustment information are transferred in the in-band manner, so that a process of negotiating link bandwidth between the first communication apparatus and the second communication apparatus cannot affect execution of a normal service between the first communication apparatus and the second communication apparatus.

According to the method provided in the first aspect, in a possible implementation, in the method, before the first communication apparatus sets the first sending apparatus to be in the first running state, the first communication apparatus buffers a packet to be sent by the first sending apparatus; and after the first communication apparatus sets the first sending apparatus to be in the first running state, the first communication apparatus sends the buffered packet through the first sending apparatus.

The packet to be sent by the first sending apparatus is buffered, so that running state switching cannot affect a normal service of the first sending apparatus.

According to the method provided in the first aspect, in a possible implementation, the first communication apparatus may set the first sending apparatus to be in the first running state in the following implementation: The first communication apparatus adjusts, based on the first link bandwidth, a first-type running parameter of a first module included in the first sending apparatus. The first module includes a first sub-MAC chip, a first sub-serializer/deserializer SerDes, and a first sub-optical module, and the first-type running parameter includes a parameter that is in a running parameter of the first module and that is related to power consumption.

In this embodiment of this application, an energy-saving policy may be implemented in three dimensions: a MAC chip, a SerDes, and an optical module, instead of being implemented only for the optical module in the three dimensions. In this way, power consumption of the first communication apparatus can be reduced more greatly, thereby saving energy.

According to the method provided in the first aspect, in a possible implementation, after the first communication apparatus sets the first sending apparatus to be in the first running state, the first communication apparatus switches the first sending apparatus from the first running state to a second running state, where when the first sending apparatus is in the second running state, the link bandwidth between the first sending apparatus and the second receiving apparatus is second link bandwidth, and the second link bandwidth is greater than the first link bandwidth.

In other words, after the first sending apparatus enters a low-power-consumption state, the first communication apparatus may further wake up the first sending apparatus from the low-power-consumption state to a non-low-power-consumption state.

According to the method provided in the first aspect, in a possible implementation, in the method, the first communication apparatus switches the first sending apparatus from the first running state to the second running state when any one of the following conditions is met: The current time point reaches an end time point of the first energy-saving time period; a quantity of packets buffered by the first communication apparatus at the current time point exceeds a reference quantity; or the first communication apparatus detects, at the current time point, that a second link that is a mutual protection link with a first link is faulty, where the first link is a link between the first sending apparatus and the second receiving apparatus.

Based on the foregoing setting, the first communication apparatus supports quickly waking up the first sending apparatus in various scenarios, to avoid severe impact on a normal service of the first sending apparatus in an emergency.

According to the method provided in the first aspect, in a possible implementation, the first sending apparatus includes the first sub-optical module. In this scenario, in the method, the first communication apparatus obtains a target parameter value of a second-type running parameter of the first sub-optical module, where the second-type running parameter includes a parameter that is in a running parameter of the first sub-optical module and that is related to a running indicator, and the target parameter value matches an environment condition for switching the first sending apparatus from the first running state to the second running state. The first communication apparatus sets the second-type running parameter of the first sub-optical module based on the target parameter value.

In this embodiment of this application, some running parameters of the first sub-optical module in the first sending apparatus need to be adaptively adjusted to match a current environment condition, to meet a running indicator of the first sub-optical module to a maximum extent. The environment condition includes, for example, an environment temperature, a component temperature, and a power supply voltage. These running parameters may be referred to as the second-type running parameter.

Considering that an environment in which the first sending apparatus is located when the first sending apparatus is woken up may be greatly different from an environment in which the first sending apparatus is located when the first sending apparatus is slept, a parameter value needed by the second-type running parameter of the first sub-optical module when the first sending apparatus is woken up also correspondingly changes greatly. Based on this, the target parameter value that is of the second-type running parameter of the first sub-optical module and that matches the environment condition during wakeup may be determined.

According to the method provided in the first aspect, in a possible implementation, the first communication apparatus may obtain a target parameter value of a second-type running parameter of the first sub-optical module in the following implementation: The first communication apparatus obtains a target mapping relationship, where the target mapping relationship indicates a mapping relationship between a parameter value of the second-type running parameter and the environment condition when the running indicator is met; and the first communication apparatus determines the target parameter value of the second-type running parameter based on the target mapping relationship and the environment condition for switching the first sending apparatus from the first running state to the second running state.

The target mapping relationship may be obtained in an online-learning manner, or may be obtained in an offline-learning manner. The target mapping relationship is pre-determined, so that efficiency of waking up the first sending apparatus can be improved.

According to the method provided in the first aspect, in a possible implementation, before the first communication apparatus obtains the target parameter value of the second-type running parameter of the first sub-optical module, the first communication apparatus may: in response to a parameter update instruction, adaptively adjust a parameter value of the second-type running parameter of the first sub-optical module based on a current environment condition and the running indicator, and store an adjusted parameter value of the second-type running parameter of the first sub-optical module. In this scenario, the target parameter value is a parameter value that is of the second-type running parameter and that is stored last time.

In the foregoing actively waking up manner, the stored parameter value of the second-type running parameter is adaptively updated, so that it can be ensured that the parameter value that is of the second-type running parameter and that is stored by the first communication apparatus when the first sending apparatus is in the first running state basically matches a latest environment condition, to support fast sleep and wakeup actions that may occur at any time.

According to the method provided in the first aspect, in a possible implementation, the first energy-saving policy is related to traffic statistics information within reference duration that is before the current time point and that is distant from the current time point, and the traffic statistics information includes one or more of average traffic, burst traffic, delay information, and packet loss information that are of the first communication apparatus and that are within the reference duration that is before the current time point and that is distant from the current time point.

In the foregoing implementation, an energy-saving policy for a subsequent specific time period may be formulated based on traffic statistics information that is of the first sending apparatus and that is within a recent time period before the current time point, to provide a solution of adaptively adjusting an energy-saving policy for the first sending apparatus based on recent traffic statistics information.

According to the method provided in the first aspect, in a possible implementation, the first communication apparatus further includes a first receiving apparatus, the second communication apparatus further includes a second sending apparatus, and the second sending apparatus and the first receiving apparatus are interconnected through an optical fiber. In this scenario, in the method, the first communication apparatus receives second running parameter adjustment information sent by the second communication apparatus. The first communication apparatus sets the first receiving apparatus to be in a third running state based on the second running parameter adjustment information, where when the first receiving apparatus is in the third running state, link bandwidth between the first receiving apparatus and the second sending apparatus is third link bandwidth.

In this embodiment of this application, energy-saving policies on transmit and receive links between the first communication apparatus and the second communication apparatus may be asymmetric, to improve flexibility of energy saving.

According to a second aspect, a communication apparatus is provided. The communication apparatus has a function of implementing behavior of the method for determining a running state in the first aspect. The communication apparatus includes at least one module. The at least one module is configured to implement the method for determining a running state provided in the first aspect.

According to a third aspect, a communication apparatus is provided. A structure of the communication apparatus includes a processor and a memory. The memory is configured to: store a program that supports the communication apparatus in performing the method for determining a running state provided in the first aspect, and store data mentioned for implementing the method for determining a running state provided in the first aspect. The processor is configured to execute the program stored in the memory. An operation apparatus of a storage device may further include a communication bus. The communication bus is configured to establish a connection between the processor and the memory.

According to a fourth aspect, a computer-readable storage medium is provided. The computer-readable storage medium stores instructions, and when the instructions are run on a computer, the computer is enabled to perform the method for determining a running state in the first aspect.

According to a fifth aspect, a computer program product including instructions is provided. When the computer program product runs on a computer, the computer is enabled to perform the method for determining a running state in the first aspect.

Technical effects achieved in the second aspect, the third aspect, the fourth aspect, and the fifth aspect are similar to the technical effects achieved by the corresponding technical means in the first aspect. Details are not described herein again.

### BRIEF DESCRIPTION OF DRAWINGS

FIG. 1 is a diagram of an architecture of a communication system according to an embodiment of this application;
FIG. 2 is a diagram of an internal structure of an optical module according to an embodiment of this application;
FIG. 3 is a diagram of an architecture of another communication system according to an embodiment of this application;
FIG. 4 is a flowchart of a method for determining a running state according to an embodiment of this application;
FIG. 5 is a diagram of comparison between channel statuses before and after running states of a first sending apparatus and a second receiving apparatus are switched according to an embodiment of this application;
FIG. 6 is a diagram of a format of a TCP packet according to an embodiment of this application;
FIG. 7 is a diagram of a format of a UDP packet according to an embodiment of this application;
FIG. 8 is a schematic flowchart of buffering a packet during running state switching according to an embodiment of this application;
FIG. 9 is a flowchart of another method for determining a running state according to an embodiment of this application;
FIG. 10 is a schematic flowchart of waking up a first sending apparatus according to an embodiment of this application;
FIG. 11 is another schematic flowchart of waking up a first sending apparatus according to an embodiment of this application;
FIG. 12 is another schematic flowchart of waking up a first sending apparatus according to an embodiment of this application;
FIG. 13 is another schematic flowchart of energy saving according to an embodiment of this application; and
FIG. 14 is a diagram of a structure of a first communication apparatus according to an embodiment of this application.

### DESCRIPTION OF EMBODIMENTS

To make objectives, technical solutions, and advantages of embodiments of this application clearer, the following further describes implementations of this application in detail with reference to accompanying drawings.

It should be understood that "a plurality of" mentioned in this specification means two or more than two. In descriptions of this application, unless otherwise specified, "/" indicates "or", for example, A/B may indicate "A or B". In this specification, "and/or" is only used to describe an association relationship between associated objects, and indicates that three relationships may exist. For example, "A and/or B" may indicate three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Before embodiments of this application are explained and described in detail, an application scenario in embodiments of this application is first described.

Currently, different communication apparatuses in a communication system may be interconnected through an optical fiber, to improve data transmission efficiency. In a scenario in which the communication apparatuses are interconnected through the optical fiber, to ensure smooth execution of a service of the communication apparatus, a link interface like an optical module in the communication apparatus usually runs based on a rated parameter, and correspondingly, power consumption of the link interface is also rated power consumption. As a result, regardless of a scenario that traffic of the communication apparatus is in, the power consumption of the link interface is usually close to 100% of the rated power consumption, and consequently, power consumption of the communication apparatus is high.

Based on this, embodiments of this application provide a method for determining a running state, to design an energy-saving policy for the link interface of the communication apparatus, so that the power consumption of the communication apparatus is reduced.

The following explains and describes architectures of communication systems mentioned in embodiments of this application.

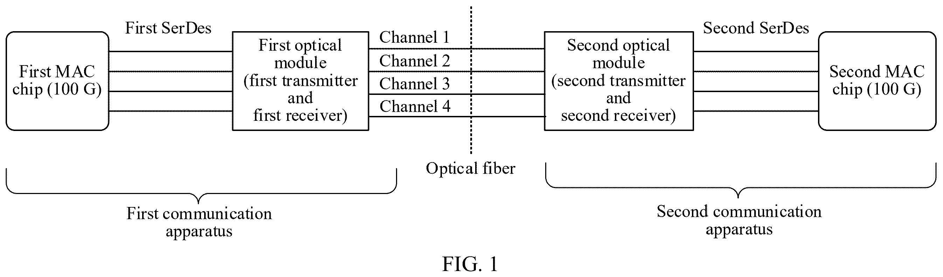

FIG. 1 is a diagram of an architecture of a communication system according to an embodiment of this application. As shown in FIG. 1, the communication system includes a first communication apparatus and a second communication apparatus. The first communication apparatus includes a first medium access control (medium access control, MAC) chip, a first serializer/deserializer (Serializer/Deserializer, SerDes), and a first optical module, and the second communication apparatus includes a second MAC chip, a second SerDes, and a second optical module. The first optical module and the second optical module are interconnected through an optical fiber, to implement data transmission between the first communication apparatus and the second communication apparatus. An example in which the first MAC chip in FIG. 1 is a MAC chip of 100 gigabit Ethernet (Gigabit Ethernet, GbE) is used. The first MAC chip may alternatively be a MAC chip of another rate, for example, 200 GbE, 400 GbE, 800 GbE, or 16 TbE.

The first optical module includes a first transmitter and a first receiver, and the second optical module includes a second transmitter and a second receiver. The first transmitter and the second receiver are interconnected through a first optical fiber, and the second transmitter and the first receiver are interconnected through a second optical fiber. The first optical fiber and the second optical fiber may reuse a same optical fiber, or may be a plurality of optical fibers that are independent of each other.

The following explains and describes functions of components in the first communication apparatus and the second communication apparatus.

The first MAC chip is configured to: after receiving an internet protocol (internet protocol, IP) data packet, process the IP data packet to generate a data frame. The data frame includes a target MAC address, a source MAC address, and a protocol type and check information in the IP data packet. This process may be referred to as performing MAC layer processing on to-be-sent data. These data frames are transferred to the first optical module through the first SerDes.

The first SerDes is configured to provide an interface between the first MAC chip and the first optical module. When receiving the data frame transferred by the first SerDes, the first optical module performs encoding and digital-analog conversion on the data frame, to send the data frame to the second optical module by using an optical signal. This process may be referred to as performing physical layer processing on the to-be-sent data.

When receiving the optical signal, the second optical module performs analog-digital conversion and decoding on the received optical signal to obtain the data frame. This process may be referred to as performing physical layer processing on received data. The second optical module transfers the decoded data frame to the second MAC chip through the second SerDes. When receiving the data frame, the second MAC chip checks the data frame, and after the check succeeds, removes a frame header and a frame trailer of the data frame to obtain an IP data packet. This process may be referred to as performing MAC layer processing on the received data. The second MAC chip sends the IP data packet to an upper layer.

The foregoing processes are used to describe how the first communication apparatus sends data to the second communication apparatus. For processes in which the second communication apparatus sends data to the first communication apparatus, also refer to the foregoing content. Details are not described herein again.

In addition, the first optical module and the second optical module may be modules independent of the MAC chips. Optionally, the optical module, the MAC chip, and the SerDes may be integrated in one chip. For example, the optical module and the SerDes are integrated in the MAC chip, or the optical module, the SerDes, and the MAC chip are integrated in a processor chip of the communication apparatus. That is, the communication apparatuses provided in this embodiment of this application may support emitting light through an independent optical module, or may support directly emitting light from a chip.

In addition, four connection lines between the first optical module and the second optical module in FIG. 1 do not indicate that there are four optical fibers between the first optical module and the second optical module, but indicate that the first optical module and the second optical module each include four channels, so that data transmission is separately performed through the four channels. The four channels may reuse one optical fiber, or data transmission may be separately implemented through four optical fibers. In addition, a quantity of channels between the first optical module and the second optical module may alternatively include another quantity, for example, 2, 8, or 16.

To facilitate understanding of a function of the channel, the following explains and describes an internal architecture of the optical module.

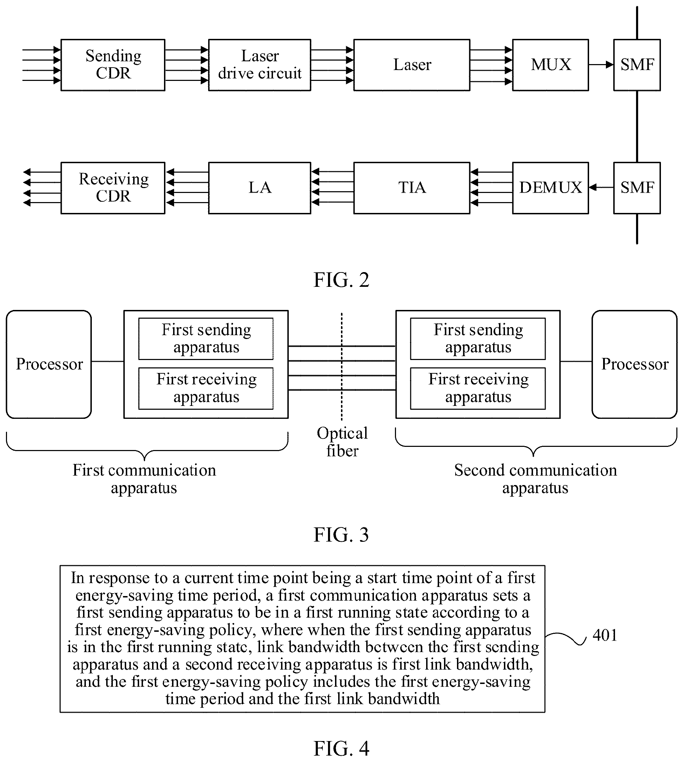

FIG. 2 is a diagram of an internal structure of an optical module according to an embodiment of this application. In FIG. 2, an example in which the optical module includes four channels is used for description. Optionally, more or fewer channels may be included between optical modules provided in this embodiment of this application.

As shown in FIG. 2, the optical module includes components related to data sending and components related to data receiving. The components related to data sending include a sending clock recovery unit (clock and data recovery, CDR), a laser drive circuit, a laser, and a multiplexer (multiplexer, MUX). The components related to data receiving include a receiving CDR, a limiting amplifier (limiting amplifier, LA), a transimpedance amplifier (transimpedance amplifier, TIA), and a demultiplexer (demultiplexer, DEMUX).

As shown in FIG. 2, the sending CDR receives four-channel data sent by a MAC chip through a SerDes. The sending CDR is configured to perform clock recovery and data redirection on an input signal of each channel. In some embodiments, the sending CDR may further compensate for a loss of a signal on a cable and a connector. The sending CDR processes the signal of each channel and then sends the signal of each channel to the laser drive circuit. The laser drive circuit is configured to convert the input signal of each channel into a corresponding modulation signal, to drive the laser to emit light. The laser sends an optical signal of each channel to the MUX, and the MUX is configured to couple optical signals of the four channels together, to perform data transmission of the four channels through a same optical fiber. For example, as shown in FIG. 2, the optical fiber may be a single mode fiber (single mode fiber, SMF). Optionally, the optical fiber may alternatively be an optical fiber of another type.

In addition, as shown in FIG. 2, when the SMF transmits the optical signal to the DEMUX of the optical module, the DEMUX is configured to: decouple the received optical signal to obtain input signals of the four channels, and separately send the input signals of the four channels to the TIA. The TIA is configured to: convert the input signal of each channel into an electrical signal, and send the converted electrical signal to the LA. The LA is configured to: convert the received electrical signal into an electrical signal with an equal amplitude, and send a processed electrical signal of each channel to the receiving CDR. The receiving CDR performs clock recovery on the electrical signal of each channel, and then sends a processed signal of each channel to the MAC chip. The LA may be integrated in the TIA or the receiving CDR.

The optical module shown in FIG. 2 is used as an example to describe an operating principle of the optical module. Optionally, the optical module mentioned in this embodiment of this application may include more or fewer components. Examples are not given one by one herein for description.

In a process of communication between the first communication apparatus and the second communication apparatus, power consumption of the first communication apparatus is mostly concentrated on link interfaces such as the first MAC chip, the first SerDes, and the first optical module. However, in an operating process of the communication apparatus, to ensure normal execution of a service of the communication apparatus, power consumption of the link interface of the communication apparatus is always rated power consumption, and has a very small relationship with traffic of the communication apparatus. Consequently, the power consumption of the first communication apparatus is high in a low-traffic scenario.

For example, traffic on a live network has a tidal feature. In the daytime, average traffic is lower than 40% of rated bandwidth. In the night, traffic is usually very low, and is within 20% of the rated bandwidth, or is even lower than 10% of the rated bandwidth. In this scenario, even if traffic of the first communication apparatus is lower than 10% of rated link bandwidth between the first communication apparatus and the second communication apparatus, power consumption of the link interface like the optical module of the first communication apparatus is still 100% of the rated power consumption for running. Consequently, the power consumption of the first communication apparatus is high.

Based on this, in embodiments of this application, a traffic feature of an ingress or an egress of the first communication apparatus may be learned, a first energy-saving policy is formulated based on the learned traffic feature, and a running state of a component related to the first transmitter in the first communication apparatus and a running state of a component related to the second receiver in the second communication apparatus are dynamically adjusted according to the first energy-saving policy, to dynamically adjust link bandwidth of a link between the first transmitter and the second receiver, so that power consumption of link interfaces of the first communication apparatus and the second communication apparatus is dynamically adjusted.

That is, in embodiments of this application, a dynamic energy-saving design can be performed for the power consumption of the link interface of the communication apparatus in tidal traffic, to reduce the power consumption of the link interface of the communication apparatus in low traffic.

Optionally, a traffic feature of an ingress or an egress of the second communication apparatus may be further learned, a second energy-saving policy may be formulated based on the learned traffic feature, and a running state of a component related to the second transmitter in the second communication apparatus and a running state of a component related to the first receiver in the first communication apparatus are dynamically adjusted according to the second energy-saving policy, to dynamically adjust link bandwidth of a link between the second transmitter and the first receiver, so that the power consumption of the link interfaces of the first communication apparatus and the second communication apparatus is dynamically adjusted.

The first energy-saving policy and the second energy-saving policy may be different. In other words, the energy-saving policies for the first communication apparatus and the second communication apparatus may be asymmetric. For example, in the asymmetric energy-saving policies, the link bandwidth between the first transmitter of the first communication apparatus and the second receiver of the second communication apparatus is first link bandwidth, and the link bandwidth between the first receiver of the first communication apparatus and the second transmitter of the second communication apparatus is third link bandwidth. The first link bandwidth is 50% of the rated bandwidth, and the third link bandwidth is 25% of the rated bandwidth.

For ease of understanding, the communication system shown in FIG. 1 is integrated into a communication system shown in FIG. 3. The following uses the communication system shown in FIG. 3 as an example for description.

As shown in FIG. 3, the communication system includes a first communication apparatus and a second communication apparatus. The first communication apparatus includes a first sending apparatus and a first receiving apparatus, and the second communication apparatus includes a second sending apparatus and a second receiving apparatus. The first sending apparatus and the second receiving apparatus are interconnected through an optical fiber, the first receiving apparatus and the second sending apparatus are interconnected through an optical fiber, and the two optical fibers may reuse a same optical fiber.

In this embodiment of this application, the first sending apparatus, the first receiving apparatus, the second sending apparatus, and the second receiving apparatus are all related components that are in the communication apparatuses and that are configured to perform MAC layer and physical layer processing on data.

For example, the first sending apparatus includes a first sub-MAC chip, a first sub-SerDes, and a first sub-optical module. For example, the first sub-MAC chip may be understood as a related component that is in the first MAC chip shown in FIG. 1 and that is responsible for processing sent data. For example, the first sub-SerDes may be understood as a related component that is in the first SerDes shown in FIG. 1 and that is responsible for processing the sent data. For example, the first sub-optical module may be understood as a related component, for example, the first transmitter, that is in the first optical module shown in FIG. 1 and that is responsible for processing the sent data.

The second receiving apparatus includes a second sub-MAC chip, a second sub-SerDes, and a second sub-optical module. For example, the second sub-MAC chip may be understood as a related component that is in the second MAC chip shown in FIG. 1 and that is responsible for processing received data. For example, the second sub-SerDes may be understood as a related component that is in the second SerDes shown in FIG. 1 and that is responsible for processing the received data. For example, the second sub-optical module may be understood as a related component, for example, the second receiver, that is in the second optical module shown in FIG. 1 and that is responsible for processing the received data.

For related explanations of the first receiving apparatus and the second sending apparatus, refer to the second receiving apparatus and the first sending apparatus. Details are not described herein again.

After a traffic feature of an ingress or an egress of the first communication apparatus is learned, and a first energy-saving policy is formulated based on the learned traffic feature, running states of the first sending apparatus and the second receiving apparatus may be dynamically adjusted according to the first energy-saving policy, to reduce link bandwidth of a link between the first sending apparatus and the second receiving apparatus. For example, the link bandwidth of the link between the first sending apparatus and the second receiving apparatus is reduced to first link bandwidth.

After a traffic feature of an ingress or an egress of the second communication apparatus is learned, and a second energy-saving policy is formulated based on the learned traffic feature, running states of the second sending apparatus and the first receiving apparatus may be dynamically adjusted according to the second energy-saving policy, to reduce link bandwidth of a link between the second sending apparatus and the first receiving apparatus. For example, the link bandwidth of the link between the second sending apparatus and the first receiving apparatus is reduced to third link bandwidth.

In addition, as shown in FIG. 3, the first communication apparatus and the second communication apparatus further include processors. The processor is configured to process a to-be-sent packet or a received packet at a network layer. For example, the processor may be a processor of a switch.

The communication systems shown in FIG. 1 and FIG. 3 may each be any communication system interconnected through the optical fiber, for example, a campus optical network or a computing cluster optical network. Examples are not given one by one herein for description. For example, in the campus optical network, the first communication apparatus may be a core switch, and the second communication apparatus may be an aggregation switch; or the first communication apparatus is an aggregation switch, and the second communication apparatus is an access switch. For another example, in the computing cluster optical network, the first communication apparatus and the second communication apparatus may be any two computing centers in a computing cluster, and the two computing centers are interconnected through an optical fiber for communication.

The following explains and describes in detail methods provided in embodiments of this application.

FIG. 4 is a flowchart of a method for determining a running state according to an embodiment of this application. As shown in FIG. 4, the method includes the following steps.

**Step 401:** In response to a current time point being a start time point of a first energy-saving time period, a first communication apparatus sets a first sending apparatus to be in a first running state according to a first energy-saving policy, where when the first sending apparatus is in the first running state, link bandwidth between the first sending apparatus and a second receiving apparatus is first link bandwidth, and the first energy-saving policy includes the first energy-saving time period and the first link bandwidth.

The first communication apparatus may pre-obtain the first energy-saving policy, where the first energy-saving policy includes the first energy-saving time period and the first link bandwidth, to reduce power consumption of the first sending apparatus by performing step 401.

In some embodiments, the first energy-saving policy is related to traffic statistics information within reference duration that is before the current time point and that is distant from the current time point, and the traffic statistics information includes one or more of average traffic, burst traffic, delay information, and packet loss information that are of the first communication apparatus and that are within the reference duration that is before the current time point and that is distant from the current time point.

Based on this, the first communication apparatus may obtain the first energy-saving policy in the following implementation: The first communication apparatus determines the first energy-saving policy based on the traffic statistics information within the reference duration that is before the current time point and that is distant from the current time point.

For example, the first energy-saving time period may be a time period after the current time point. In this scenario, the first communication apparatus may formulate an energy-saving policy for a subsequent specific time period based on traffic statistics information that is of the first sending apparatus and that is within a recent time period before the current time point, to provide a solution of adaptively adjusting an energy-saving policy for the first sending apparatus based on recent traffic statistics information.

The reference duration may be one week, one month, one quarter, or the like.

In a current communication network, there are usually clear rules for traffic on workdays from Monday to Friday and traffic on weekends of Saturday and Sunday. For example, for a communication apparatus in an application network in a residential area, traffic on workdays is low, and traffic on weekends is high; for a communication apparatus in an application network in an operating area, traffic on workdays is high, and traffic on weekends is low. In addition, in 24 hours every day, a difference between traffic in peak hours in the daytime and traffic in off-peak hours at night can also be viewed. In addition, for different geographical areas and network node levels, traffic rules can be further refined to 12 hours, or more refined to four hours. Therefore, in some embodiments, the reference duration may be one week, to be specific, 7*24 hours. In this scenario, the first communication apparatus learns traffic statistics information within a recent week (7*24 hours), and formulates an energy-saving policy for a specific time period in a next week based on the learned traffic statistics information.

In addition, for example, the average traffic that is of the first communication apparatus and that is within the reference duration that is before the current time point and that is distant from the current time point may include average traffic that is of the first sending apparatus and that is within each of a plurality of periods of time in the reference duration. The average traffic may include average traffic at an ingress of the first sending apparatus, or may include average traffic at an egress of the first sending apparatus.

For example, the burst traffic that is of the first communication apparatus and that is within the reference duration that is before the current time point and that is distant from the current time point may include burst traffic that is at the ingress of the first sending apparatus and that is within each of the plurality of periods of time in the reference duration.

For example, the delay information that is of the first communication apparatus and that is within the reference duration that is before the current time point and that is distant from the current time point may include delay information that is of the first communication apparatus and that is within each of the plurality of periods of time in the reference duration. The delay information may include duration needed for transferring a packet from the ingress of the first sending apparatus to the egress of the first sending apparatus.

For example, the packet loss information that is of the first communication apparatus and that is within the reference duration that is before the current time point and that is distant from the current time point may include packet loss information that is of the first communication apparatus and that is within each of the plurality of periods of time in the reference duration. The packet loss information may include a quantity of packets that are sent by the first sending apparatus to the second receiving apparatus and that fail to be successfully received by the second receiving apparatus.

For example, the first communication apparatus may determine, by using a neural network model, the first energy-saving policy based on the traffic statistics information within the reference duration that is before the current time point and that is distant from the current time point. In this scenario, the neural network model may be pre-trained, so that an energy-saving policy output by using the neural network model meets a requirement.

For example, if average traffic that is of the first sending apparatus and that is within a specific time period in the reference duration that is before the current time point and that is distant from the current time point is low, there is basically no burst traffic, or burst traffic is very small, and a packet loss status and a delay status within the time period also meet the requirement, the time period may be used as the first energy-saving time period. In addition, link bandwidth that just meets the requirement of the first sending apparatus is determined based on the average traffic and the burst traffic of the first sending apparatus within the time period, and the link bandwidth is used as the first link bandwidth.

The first link bandwidth may be a specific bandwidth value, or may be a proportion of rated link bandwidth between the first sending apparatus and the second receiving apparatus. For example, if the rated link bandwidth between the first sending apparatus and the second receiving apparatus is 100 GbE, the first link bandwidth may be 50 GbE, 25 GbE, or the like.

Optionally, in this embodiment of this application, for example, the first energy-saving policy may further include a delay policy and/or a packet loss policy. The delay policy indicates an upper limit that is of a delay and that can be accepted by the first communication apparatus. The packet loss policy indicates an upper limit that is of a packet loss rate and that can be accepted by the first communication apparatus. Subsequently, the first communication apparatus may wake up the first sending apparatus in a low-power-consumption state according to the delay policy and the packet loss policy. A related implementation is described in detail subsequently. Details are not described herein.

In addition, in a scenario in which a primary link and a secondary link exist, if the link between the first sending apparatus and the second receiving apparatus is the secondary link, the first communication apparatus may further disable the entire first sending apparatus within the first energy-saving time period, that is, set the first link bandwidth to 0. In this way, within the first energy-saving time period, traffic transmission is performed over the primary link, and the secondary link is disabled. In comparison with a manner of simultaneously adjusting link bandwidth of the primary link and the secondary link to a specific proportion of the rated bandwidth, in this manner, overall power consumption of a communication system may be further reduced.

Based on this, the first communication apparatus may determine the first energy-saving policy based on the traffic statistics information in the following implementation: determining the first link bandwidth as 0 if the traffic statistics information indicates that traffic sent by the first sending apparatus to the second receiving apparatus does not exceed a half of the rated bandwidth, where the rated bandwidth is the rated link bandwidth between the first sending apparatus and the second receiving apparatus, and the link between the first sending apparatus and the second receiving apparatus is a secondary link in a plurality of links corresponding to the first communication apparatus. The plurality of links corresponding to the first communication apparatus are used to forward traffic with a same destination address.

In addition, the foregoing implementation is described by using an example in which the first communication apparatus automatically determines the first energy-saving policy based on the learned traffic statistics information. Optionally, a related person skilled in the art may determine the first energy-saving policy based on experience and with reference to the traffic statistics information within the reference duration that is before the current time point and that is distant from the current time point, and write the first energy-saving policy into the first communication apparatus. Details are not described herein.

In addition, the foregoing is described by using an example in which the first energy-saving policy includes one energy-saving time period and one piece of link bandwidth. Optionally, the first energy-saving policy may further include a plurality of energy-saving periods of time and link bandwidth corresponding to each energy-saving time period, so that within each energy-saving time period, the link bandwidth between the first sending apparatus and the second receiving apparatus is subsequently reduced to the link bandwidth corresponding to the energy-saving time period.

After obtaining the first energy-saving policy in any one of the foregoing manners, the first communication apparatus may set a running state of the first sending apparatus according to the first energy-saving policy by performing step 401, to reduce the power consumption of the first sending apparatus. For ease of understanding, a state before the first sending apparatus is in the first running state is referred to as a current running state. In this case, the first sending apparatus may be switched from the current running state to the first running state by performing step 401, so that the link bandwidth between the first sending apparatus and the second receiving apparatus is reduced from current link bandwidth to the first link bandwidth.

Because the first sending apparatus is configured to perform MAC layer and physical layer processing on data, in this embodiment of this application, running states of related components at a MAC layer and a physical layer of the first communication apparatus may be set, to implement the energy-saving policy by adjusting the link bandwidth, so that power consumption of the first communication apparatus is reduced. The first running state may further be referred to as a low-power-consumption state or a low-power-consumption mode.

In some embodiments, the first communication apparatus may set the first sending apparatus to be in the first running state in the following implementation: The first communication apparatus adjusts, based on the first link bandwidth, a first-type running parameter of a first module included in the first sending apparatus, where the first module includes a first sub-MAC chip, a first sub-serializer/deserializer SerDes, and a first sub-optical module, and the first-type running parameter includes a parameter that is in a running parameter of the first module and that is related to power consumption.

For related explanations of the first sub-MAC chip, the first sub-SerDes, and the first sub-optical module, refer to the embodiment shown in FIG. 3. Details are not described herein again.

The first communication apparatus adjusts the first-type running parameter of the first module included in the first sending apparatus, so that the traffic sent by the first sending apparatus to the second receiving apparatus meets the first link bandwidth.

For example, in a scenario in which the first sending apparatus includes a plurality of channels, the first communication apparatus adjusts the first-type running parameter of the first module included in the first sending apparatus, so that several channels in the first sending apparatus are in a sleep state, and the traffic sent by the first sending apparatus to the second receiving apparatus meets the first link bandwidth.

In this scenario, for the first sub-MAC chip, for example, adjusting the first-type running parameter may include frequency reduction, voltage reduction, dynamic adjustment of a data bit width, clock gating (clock gating), and power gating (power gating). For the first sub-SerDes, for example, adjusting the first-type running parameter may include sleeping several interfaces between the first sub-MAC chip and the first sub-optical module. For the first sub-optical module, adjusting the first-type running parameter may include, for example, adjusting a digital circuit and an analog circuit in the first sub-optical module.

In other words, in this embodiment of this application, the energy-saving policy may be implemented in three dimensions: a MAC chip, a SerDes, and an optical module, instead of being implementing only for the optical module in the three dimensions. In this way, the power consumption of the first communication apparatus can be reduced more greatly, thereby saving energy.

Optionally, when the first communication apparatus implements the energy-saving policy in another manner, for example, through a non-sleep channel, reference may also be made to the foregoing implementations. Examples are not given one by one herein for description.

In addition, after obtaining the first energy-saving policy for the first sending apparatus, the first communication apparatus may further determine first running parameter adjustment information based on the first link bandwidth, where the first running parameter adjustment information indicates how to adjust a running parameter, so that the link bandwidth between the first sending apparatus and the second receiving apparatus is the first link bandwidth. In addition, the first communication apparatus sends the first energy-saving time period and the first running parameter adjustment information to the second communication apparatus, so that the second communication apparatus also runs according to the first energy-saving policy within the first energy-saving time period, to reduce power consumption of the second communication apparatus.

Based on this, before the first communication apparatus sets the first sending apparatus to be in the first running state, the first communication apparatus may further obtain the first running parameter adjustment information corresponding to the first link bandwidth; and the first communication apparatus sends the first energy-saving time period and the first running parameter adjustment information to the second communication apparatus, to indicate that in response to the current time point being the start time point of the first energy-saving time period, the second communication apparatus sets the second receiving apparatus to be in the first running state.

In this embodiment of this application, an objective of switching the first sending apparatus and the second receiving apparatus from the current running state to the first running state is to reduce the link bandwidth between the first sending apparatus and the second receiving apparatus to the first link bandwidth. Therefore, a process in which the first communication apparatus sends the first running parameter adjustment information and the first energy-saving time period to the second communication apparatus may be referred to as a process of negotiating the link bandwidth. A process in which the first sending apparatus and the second receiving apparatus are switched from the current running state to the first running state may be referred to as a link re-establishment process.

In some embodiments, the first sending apparatus includes the plurality of channels, and correspondingly, the first running parameter adjustment information includes sleep channel information. For example, the sleep channel information indicates a sleep channel in the plurality of channels in the first running state. Optionally, the sleep channel information may further indicate a channel that operates normally in the plurality of channels in the first running state.

In this scenario, the first communication apparatus may determine the first running parameter adjustment information based on the first link bandwidth in the following implementation: The first communication apparatus determines the sleep channel information based on the first link bandwidth.

That is, the energy-saving policy provided in this embodiment of this application may be implemented by sleeping one or more channels in the plurality of channels. This energy-saving policy does not need a complex operation, and therefore is easy to be implemented.

Table 1 illustrates a relationship between the first link bandwidth and the sleep channel according to this embodiment of this application. As shown in Table 1, the first sending apparatus and the second receiving apparatus each include four channels, and the rated link bandwidth between the first sending apparatus and the second receiving apparatus is 100 GbE, in other words, bandwidth of each channel is 25 GbE. In this case, when the first link bandwidth is 50 GbE, only two channels need to be in a standard operating state. The standard operating state means that the channels run based on a rated parameter. Correspondingly, the sleep channel information may indicate which two of the four channels need to be slept. In this case, when the first link bandwidth is 25 GbE, only one channel needs to be in a standard operating state, and correspondingly, the sleep channel information may indicate which three of the four channels need to be slept.

**Table 1**

| The rated link bandwidth is 100 GbE | When the first link bandwidth is 50 GbE | When the first link bandwidth is 25 GbE |
|---|---|---|
| MAC chip: 100 GbE | MAC chip: 50 GbE | MAC chip: 25 GbE |
| SerDes: 4*25 GbE | SerDes: 2*25 GbE | SerDes: 1*25 GbE |
| Optical module: 4*25 GbE | Optical module: 2*25 GbE | Optical module: 1*25 GbE |

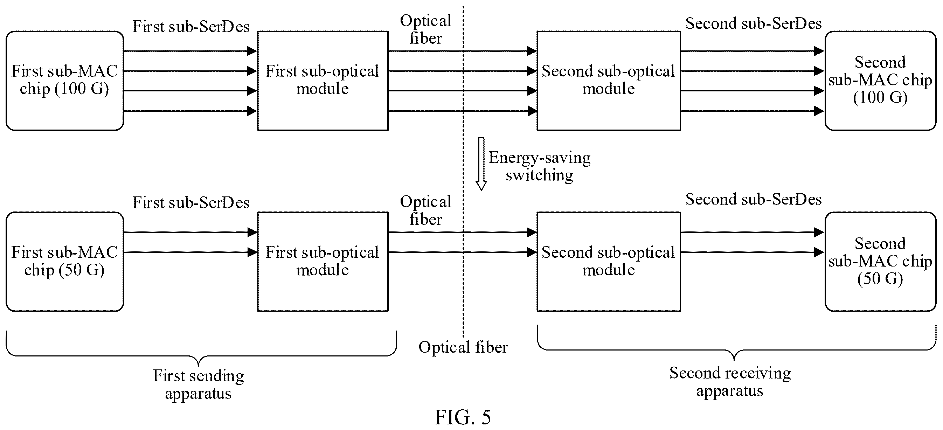

FIG. 5 is a diagram of comparison between channel statuses before and after running states of a first sending apparatus and a second receiving apparatus are switched according to an embodiment of this application.

As shown in FIG. 5, the first sending apparatus and the second receiving apparatus each include four channels. When the running states of the first sending apparatus and the second receiving apparatus are not switched, the four channels included in the first sending apparatus are all configured to send data, and the four channels included in the second receiving apparatus are all configured to receive data. If bandwidth of each channel is 25 GbE, link bandwidth between the first sending apparatus and the second receiving apparatus may reach 100 GbE.

After the running states of the first sending apparatus and the second receiving apparatus are switched, in other words, after the first sending apparatus and the second receiving apparatus perform energy-saving switching, two of the four channels included in the first sending apparatus are configured to send the data, and the other two channels are not configured to send the data, for example, are in a sleep state; and two of the four channels included in a second sending apparatus are configured to receive the data, and the other two channels are not configured to receive the data, for example, are in the sleep state. In this case, the link bandwidth between the first sending apparatus and the second receiving apparatus is reduced to 50 GbE.

Optionally, in this embodiment of this application, in addition to being implemented through a sleep channel, an energy-saving policy may be implemented in another manner. For example, corresponding bandwidth may be reduced for each channel according to a specific proportion, to reduce overall bandwidth.

In addition, a first communication apparatus may send a first energy-saving time period and first running parameter adjustment information to a second communication apparatus in an out-of-band manner or an in-band manner. The following separately explains and describes the two implementations.

### (1) Out-of-band manner

The out-of-band manner may be understood as that a processor of the first communication apparatus independently generates an energy-saving negotiation packet including the first energy-saving time period and the first running parameter adjustment information, and the energy-saving negotiation packet is a packet different from a service packet normally sent by the first sending apparatus. Therefore, this manner is referred to as the out-of-band manner.

Based on this, the first communication apparatus may send the first energy-saving time period and the first running parameter adjustment information to the second communication apparatus in the following implementation: The first communication apparatus generates the energy-saving negotiation packet, where the energy-saving negotiation packet carries the first energy-saving time period and the first running parameter adjustment information; and the first communication apparatus sends the energy-saving negotiation packet to the second receiving apparatus.

For example, the processor of the first communication apparatus generates an Ethernet frame, where the Ethernet frame carries the first energy-saving time period and the first running parameter adjustment information. The processor sends the Ethernet frame to the first sending apparatus. The first sending apparatus performs MAC layer and physical layer processing on the Ethernet frame to obtain the energy-saving negotiation packet. The first sending apparatus sends the energy-saving negotiation packet to the second receiving apparatus.

The first energy-saving time period and the first running parameter adjustment information are transferred in the out-of-band manner, so that a process of negotiating the link bandwidth between the first communication apparatus and the second communication apparatus can be more flexible.

For example, the energy-saving negotiation packet may be a transmission control protocol (transmission control protocol, TCP) packet or a user datagram protocol (user datagram protocol, UDP) packet.

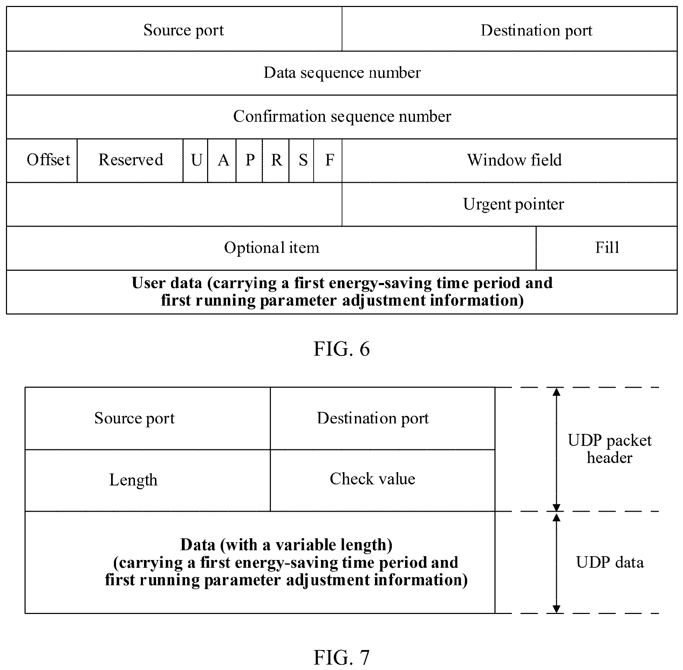

FIG. 6 is a diagram of a format of a TCP packet according to an embodiment of this application. As shown in FIG. 6, a first energy-saving time period and first running parameter adjustment information may be carried in a user data field of the TCP packet, to generate an energy-saving negotiation packet. For other fields of the TCP packet in FIG. 6, refer to a related standard. Detailed explanations and descriptions are not given one by one herein.

FIG. 7 is a diagram of a format of a UDP packet according to an embodiment of this application. As shown in FIG. 7, a first energy-saving time period and first running parameter adjustment information may be carried in a data field of the UDP packet, to generate an energy-saving negotiation packet. For other fields of the UDP packet in FIG. 7, refer to a related standard. Detailed explanations and descriptions are not given one by one herein.

In addition, the energy-saving negotiation packet may further carry other information used for negotiation. For example, the energy-saving negotiation packet may further carry one or more of first negotiation information, second negotiation information, and third negotiation information. The first negotiation information indicates whether a first sending apparatus supports a MAC energy-saving mode, the second negotiation information indicates whether the first sending apparatus supports an optical module energy-saving mode, and the third negotiation information indicates whether the first sending apparatus supports a reference-level wakeup mode. For example, the reference-level wakeup mode may be at a millisecond (ms) level or a microsecond (µs) level.

The MAC energy-saving mode means adaptively adjusting a running parameter of MAC, so that an amount of data processed by the MAC matches first link bandwidth. The optical module energy-saving mode means adaptively adjusting running parameters of an internal digital circuit and an internal analog circuit based on the first link bandwidth. An ms-level wakeup mode means that the apparatus can be quickly woken up at the ms level after the apparatus is in a second running state.

When the energy-saving negotiation packet carries the foregoing other negotiation information, when receiving the energy-saving negotiation packet sent by a first communication apparatus, a second communication apparatus may further reply to the first communication apparatus with a mode supported by the second communication apparatus, and replied information may also be carried by the energy-saving negotiation packet. For ease of description, the energy-saving negotiation packet sent by the first communication apparatus to the second communication apparatus is referred to as a first energy-saving negotiation packet, and an energy-saving negotiation packet sent by the second communication apparatus to the first communication apparatus is referred to as a second energy-saving negotiation packet.

The second energy-saving negotiation packet may also carry one or more of the first negotiation information, the second negotiation information, and the third negotiation information. The first negotiation information in the second energy-saving negotiation packet indicates whether a second receiving apparatus supports the MAC energy-saving mode, the second negotiation information indicates whether the second receiving apparatus supports the optical module energy-saving mode, and the third negotiation information indicates whether the second receiving apparatus supports the reference-level wakeup mode.

When both the first communication apparatus and the second communication apparatus determine that the second communication apparatus and the first communication apparatus support corresponding modes, it indicates that a current link bandwidth negotiation process is completed.

In addition, after receiving the energy-saving negotiation packet sent by a peer end, the first communication apparatus or the second communication apparatus may further reply to the peer end with a confirmation message, where the confirmation message is used to notify the peer end that a local end has received the energy-saving negotiation packet sent by the peer end. That is, the link bandwidth negotiation process may be implemented in a manner similar to a handshake.

For example, the energy-saving negotiation packet may be confirmed by using 3*3.3 ms consecutive packets. To be specific, when consecutively receiving three energy-saving negotiation packets within 3*3.3 ms, the first communication apparatus or the second communication apparatus determines that the energy-saving negotiation packet sent by the peer end is received successfully, and replies to the peer end with the confirmation message.

Table 2 provides illustrative descriptions of information and the confirmation message that are carried in the energy-saving negotiation packet according to this embodiment of this application. As shown in Table 2, the energy-saving negotiation packet simultaneously carries the first negotiation information, the second negotiation information, the third negotiation information, and the first running parameter adjustment information, and the energy-saving negotiation packet further includes the first energy-saving time period (not shown in Table 2). In Table 2, for example, the first running parameter adjustment information is a currently negotiated sleep mode, and the sleep mode includes a quantity of sleep channels and an identifier of each sleep channel (not shown in Table 2).

**Table 2**

| Whether the MAC energy-saving mode is supported | Whether the optical module energy-saving mode is supported | Whether the ms-level wakeup mode is supported | Currently negotiated sleep mode | Confirmation message |
|---|---|---|---|---|
| 1b, 0-unsupported, and 1-supported | 1b, 0-unsupported, and 1-supported | 1b, 0-unsupported, and 1-supported | 3b×××: Quantity of sleep channels | 1b,0-unconfirmed, and 1-confirmed |

Table 3 shows an example of the identifier of each channel according to this embodiment of this application. As shown in Table 3, three bits may indicate a specific sleep channel number. For example, 000 indicates a channel 0, 001 indicates a channel 1, 010 indicates a channel 2, and 111 indicates a channel 7.

**Table 3**

| Specific sleep channel number | Specific sleep channel number | Specific sleep channel number | Specific sleep channel number |
|---|---|---|---|
| 3b: 000-channel 0 | 3b: 001-channel 1 | 3b: 010-channel 2 | 3b: 111-channel 7 |

### (2) In-band manner

The in-band manner may be understood as that the first sending apparatus of the first communication apparatus adds the first energy-saving time period and the first running parameter adjustment information to a packet when performing MAC layer or physical layer processing on the packet. It is equivalent to that the first energy-saving time period and the first running parameter adjustment information are carried by a service packet normally sent by the first sending apparatus. Therefore, this manner is referred to as the in-band manner.

Based on this, in some embodiments, the first communication apparatus may send the first energy-saving time period and the first running parameter adjustment information to the second communication apparatus in the following implementation: The first sending apparatus receives a to-be-sent Ethernet frame; the first sending apparatus performs MAC layer and physical layer processing on the Ethernet frame, and adds the first energy-saving time period and the first running parameter adjustment information to a reference field of a processed packet; and the first sending apparatus sends the processed packet to the second receiving apparatus.

The first energy-saving time period and the first running parameter adjustment information are transferred in the in-band manner, so that a process of negotiating link bandwidth between the first communication apparatus and the second communication apparatus cannot affect execution of a normal service between the first communication apparatus and the second communication apparatus.

Currently, in a definition of an Ethernet MAC standard, a MAC packet starts with a 7-bit preamble (Preamble) and ends with a 12-bit interpacket gap (interpacket gap, IPG). The two fields function as delimiting two MAC packets. Based on this, for example, the first sending apparatus may include the first energy-saving time period and the first running parameter adjustment information in the two fields in the processed packet. That is, the reference field includes the preamble and/or the IPG.

In addition, when the MAC packet obtained through MAC layer processing is sent through a SerDes, an alignment marker (alignment marker, AM) field is added to the MAC packet. The field is used to position and identify a specific packet from a serial 0/1-bit data stream. Based on this, for example, the first sending apparatus may use the AM field to carry the first energy-saving time period and the first running parameter adjustment information. That is, the reference field may further include the AM field.

In addition, in this embodiment of this application, before the first communication apparatus successfully sets the first sending apparatus to be in a first running state, the first communication apparatus may buffer a packet to be sent by the first sending apparatus. Then, after the first communication apparatus sets the first sending apparatus to be in the first running state according to a first energy-saving policy, the first communication apparatus sends the buffered packet through the first sending apparatus.

The packet to be sent by the first sending apparatus is buffered, so that running state switching cannot affect a normal service of the first sending apparatus.

Processes before the first communication apparatus sets the first sending apparatus to be in the first running state may include the foregoing process of negotiating the link bandwidth and the foregoing link re-establishment process.

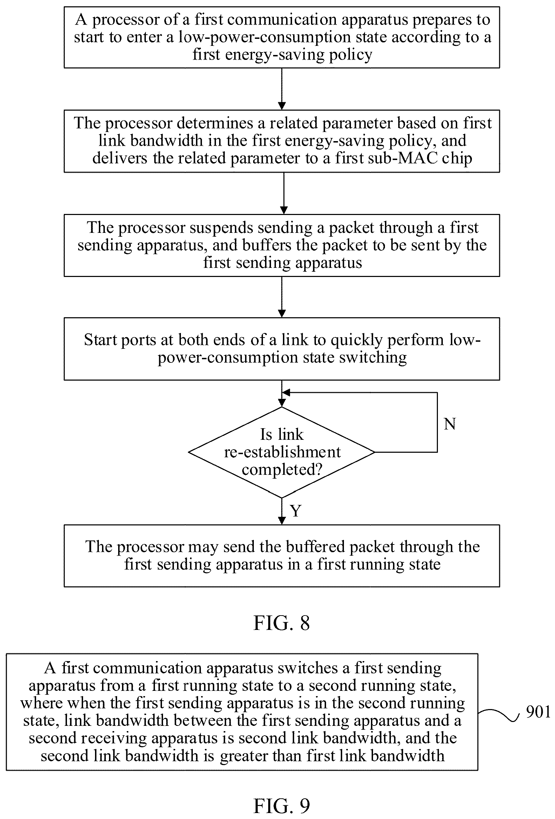

FIG. 8 is a schematic flowchart of buffering a packet during running state switching according to an embodiment of this application. As shown in FIG. 8, a processor of a first communication apparatus may determine, according to a first energy-saving policy, a time point for entering a first running state (that is, a start time point of a first energy-saving time period), to prepare to start to enter a low-power-consumption state. Specifically, the processor first determines a related parameter based on first link bandwidth in the first energy-saving policy, and delivers the related parameter to a first sub-MAC chip. The related parameter includes a sleep channel, bandwidth of each channel, a flow control parameter, and the like. Then, the processor suspends sending the packet through a first sending apparatus, and buffers the packet to be sent by the first sending apparatus, for example, may buffer the packet in an internal port buffer (buffer) of the first sending apparatus. Then, the processor starts the foregoing process of negotiating the link bandwidth and the foregoing link re-establishment process, to start ports at both ends of a link to quickly perform low-power-consumption state switching. After link re-establishment is completed between the first sending apparatus and a second receiving apparatus, in other words, the first sending apparatus is successfully switched from a current running state to the first running state, the processor may send the buffered packet through the first sending apparatus in the first running state.

It should be noted that in the foregoing scenario in which the first running parameter adjustment information is sent in the in-band manner, that is, in the process of negotiating link bandwidth in the in-band manner, sending of the service packet may not need to be suspended in this process, so that the first energy-saving time period and first running parameter adjustment information are transferred in the in-band manner.

In addition, in this embodiment of this application, to support the first sending apparatus in quickly being switched from the current running state to the first running state, a to-be-adjusted adjustment value of a first-type running parameter may be pre-determined. For example, adjustment values of the first-type running parameter for different link bandwidth may be pre-determined for the first sending apparatus. In this way, after determining the first link bandwidth, the processor may quickly switch the first sending apparatus from the current running state to the first running state directly based on the first link bandwidth, so that running state switching does not affect a delay of a current normal service.

In addition, in this embodiment of this application, after the first sending apparatus enters the first running state (namely, the low-power-consumption state), the first communication apparatus may further compress data to be sent by the first sending apparatus, to reduce a bandwidth requirement on a link interface, and achieve a better and more stable energy-saving effect. Compression algorithms used to compress the data may include a lempel-ziv-markov chain-algorithm 2 (lempel-ziv-markov chain-algorithm 2, LZMA2), a string table compression algorithm (lempel-ziv-welch encoding, LZW), and the like.

In this embodiment of this application, after the first sending apparatus enters the first running state (namely, the low-power-consumption state), the first communication apparatus may further quickly wake up the first sending apparatus based on a current network requirement, to avoid impact on a current service.

FIG. 9 is a flowchart of another method for determining a running state according to an embodiment of this application. As shown in FIG. 9, the method includes the following steps.

**Step 901:** A first communication apparatus switches a first sending apparatus from a first running state to a second running state, where when the first sending apparatus is in the second running state, link bandwidth between the first sending apparatus and a second receiving apparatus is second link bandwidth, and the second link bandwidth is greater than first link bandwidth.

In some embodiments, the first communication apparatus may switch the first sending apparatus from the first running state to the second running state in response to sleep and wakeup instructions, so that the link bandwidth between the first sending apparatus and the second receiving apparatus is restored from the first link bandwidth to the second link bandwidth.

In other words, after the first sending apparatus enters a low-power-consumption state, the first communication apparatus may further wake up the first sending apparatus from the low-power-consumption state to a non-low-power-consumption state in response to the sleep and wakeup instructions.

The second link bandwidth may be the same as the current link bandwidth in step 401, or may be different from the current link bandwidth in step 401. For example, in step 401, the current link bandwidth is rated link bandwidth 100 G between the first sending apparatus and the second receiving apparatus, and the first link bandwidth is 50 G. In this scenario, the second link bandwidth may be 100 G. In this case, the first link bandwidth is restored to the rated bandwidth 100 G in response to the sleep and wakeup instructions. Optionally, the first link bandwidth is 50 G. In this scenario, third link bandwidth may alternatively be 75 G. In this case, the first link bandwidth is restored to 75% of the rated bandwidth in response to the sleep and wakeup instructions.

In some embodiments, the first communication apparatus may switch the first sending apparatus from the first running state to the second running state when any one of the following conditions is met:

A current time point reaches an end time point of a first energy-saving time period; a quantity of packets buffered by the first communication apparatus at a current time point exceeds a reference quantity; or the first communication apparatus detects, at a current time point, that a second link that is a mutual protection link with a first link is faulty, where the first link is a link between the first sending apparatus and the second receiving apparatus.

Based on the foregoing setting, the first communication apparatus supports quickly waking up the first sending apparatus in various scenarios, to avoid severe impact on a normal service of the first sending apparatus in an emergency.

For example, after the first sending apparatus is switched to the first running state, if no other emergency occurs within the first energy-saving time period, the first communication apparatus may wake up the first sending apparatus when the end time point of the first energy-saving time period is reached.

For another example, after the first sending apparatus is switched to the first running state, if burst traffic that does not appear before occurs in a network within the first energy-saving time period, the quantity of packets buffered by the first communication apparatus increases sharply. In this case, to avoid severe congestion caused by the current network, the first sending apparatus may be woken up, to increase the link bandwidth between the first sending apparatus and the second receiving apparatus.

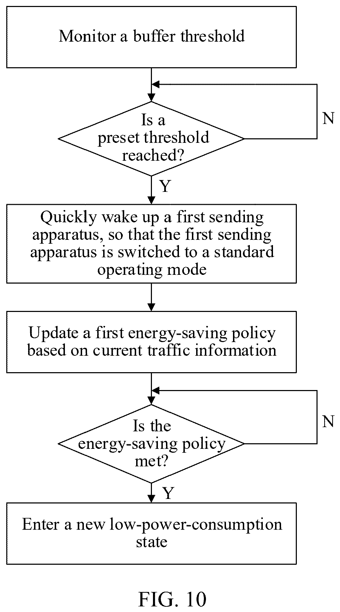

FIG. 10 is a schematic flowchart of waking up a first sending apparatus according to an embodiment of this application. As shown in FIG. 10, after the first sending apparatus enters a first running state, a first communication apparatus detects a buffer threshold of the first communication apparatus, and if the buffer threshold reaches a preset threshold, quickly wakes up the first sending apparatus, so that the first sending apparatus is switched to a second running state, for example, switched to a standard operating mode (to be specific, operating based on rated bandwidth).

The preset threshold may be determined when a first energy-saving policy is formulated. In other words, the first energy-saving policy may further include the preset threshold. The preset threshold may be specified by a skilled person based on experience. In addition, for example, the buffer threshold of the first communication apparatus may be a buffer threshold of a sent packet of the first sending apparatus, or a buffer threshold of a packet that is to be sent by another communication apparatus to the first sending apparatus.

In addition, based on the foregoing step 401, it can be learned that the first energy-saving policy is obtained by learning traffic statistics information that is before a current time point. If the buffer threshold reaches the preset threshold within a first energy-saving time period, it indicates that current traffic is different from traffic previously obtained through learning. Therefore, as shown in FIG. 10, the first communication apparatus may further update the first energy-saving policy based on current traffic information, to subsequently control, according to an updated first energy-saving policy, whether the first sending apparatus enters a new low-power-consumption state.

For another example, after the first sending apparatus is switched to the first running state, if a second link that is a mutual protection link with a first link is faulty within the first energy-saving time period, where the first link is a link between the first sending apparatus and a second receiving apparatus, to avoid impact on normal execution of a service on the second link, transmission of traffic on the second link may be performed over the first link. In this case, the first sending apparatus may also be woken up to increase bandwidth of the first link.

An example in which the first link and the second link each include four channels is used for description. When the first sending apparatus is in the first running state, it is assumed that in the first link, two channels are in an operating state, and two channels are in a sleep state. If it is detected that the second link is faulty, all the four channels included in the second link may fail to be used for data transmission. In this case, the first sending apparatus may be woken up, to wake up the two sleep channels in the first link.

It should be noted that in the foregoing scenario, if a part of the channels in the second link is in the sleep state, when it is detected that the second link is faulty, considering that the traffic on the second link may be small, the first sending apparatus may not need to be woken up.

That the second link is faulty may be implemented by using a bidirectional forwarding detection (bidirectional forwarding detection, BFD) technology. For an implementation process of the BFD technology, refer to a related standard. Details are not described herein. Optionally, whether the second link is faulty may alternatively be detected by using another fault detection technology. Examples are not given one by one herein for description.

In addition, the second link may be a link using the first communication apparatus as one end of the second link. In this case, that the second link is faulty may be detected by the first communication apparatus by using the BFD technology. Optionally, neither of both ends of the second link may be the first communication apparatus. In this case, that the second link is faulty may be detected by another third communication apparatus by using the BFD technology, and the third communication apparatus is one end of the second link.

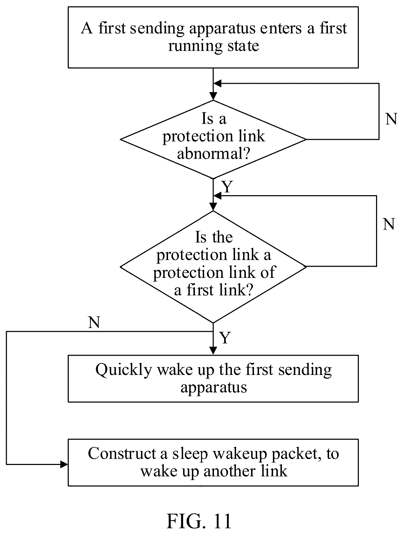

FIG. 11 is another schematic flowchart of waking up a first sending apparatus according to an embodiment of this application. As shown in FIG. 11, after the first sending apparatus enters a first running state, that is, enters a low-power-consumption state, a first communication apparatus detects, by using a BFD technology, whether a protection link is abnormal. If the protection link is abnormal, the first communication apparatus continues to determine whether the protection link is a protection link of a link (that is, a first link) between the first sending apparatus and a second receiving apparatus. If the protection link is the protection link of the first link, the first sending apparatus may be quickly woken up, for example, the first sending apparatus may be woken up to enter a standard operating mode (to be specific, operating based on rated bandwidth).

Correspondingly, if the protection link is not the protection link of the first link, for example, is a protection link of another link, and neither of both ends of the another link is a sending apparatus included in the first communication apparatus, the first communication apparatus may further construct a special sleep wakeup packet, to notify one end of the another link to wake up the another link.

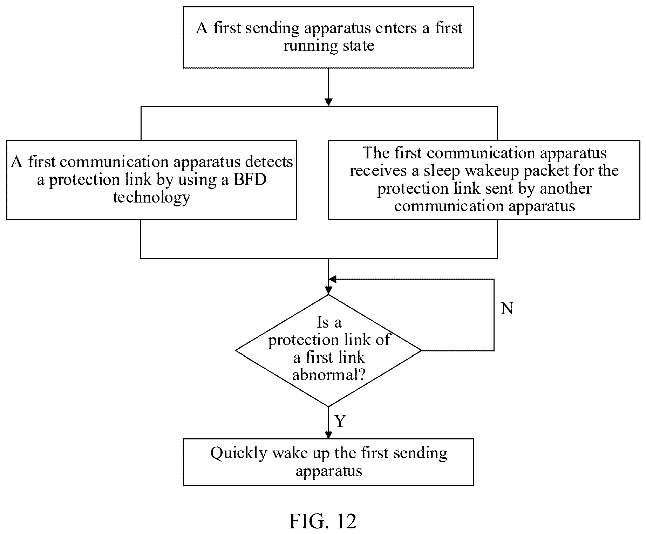

FIG. 12 is another schematic flowchart of waking up a first sending apparatus according to an embodiment of this application. As shown in FIG. 12, after the first sending apparatus enters a first running state, that is, enters a low-power-consumption state, a first communication apparatus may determine, in two manners, whether a protection link of a link (that is, a first link) between the first sending apparatus and a second receiving apparatus is faulty. In one case, when one end of the protection link and one end of the first link are both located on the first communication apparatus, in this scenario, the first communication apparatus may detect, by using a BFD technology, that the protection link is faulty. In another case, when neither of ends of the protection link is located on the first communication apparatus, in this scenario, the first communication apparatus may determine, by receiving a sleep wakeup packet sent by another communication apparatus, that the protection link is abnormal.

It should be noted that the foregoing wakeup scenarios are used as examples for description. Optionally, in this embodiment of this application, another wakeup scenario may be alternatively set based on a network requirement. For example, in a scenario in which a first energy-saving policy includes a packet loss policy and a policy, the first communication apparatus may determine, based on a relationship between a current packet loss status and the packet loss policy, or based on a relationship between a current delay status and the delay policy, whether the first sending apparatus needs to be woken up. Examples are not given one by one herein for description.

In addition, when needing to wake up the first sending apparatus, the first sending apparatus may directly wake up the first sending apparatus, for example, wake up a sleep channel. In this scenario, the second receiving apparatus may detect a signal re-received by the sleep channel. In this case, the second receiving apparatus may wake up a corresponding sleep channel in response to the detected signal, in other words, the second receiving apparatus is switched to a second running state.

In addition, the first sending apparatus may further send third running parameter adjustment information to the second receiving apparatus, to negotiate with the second receiving apparatus for link bandwidth that needs to be reached after wakeup, that is, negotiate the link bandwidth. After the first communication apparatus and the second communication apparatus complete the negotiation for the link bandwidth, the first sending apparatus and the second receiving apparatus may respectively control the first sending apparatus and the second receiving apparatus to be switched from a current running state to the second running state, so that link bandwidth between the first sending apparatus and the second receiving apparatus is restored to second link bandwidth.

For an implementation in which the first sending apparatus sends the third running parameter adjustment information to the second receiving apparatus, refer to the foregoing implementation in which the first sending apparatus sends the first running parameter adjustment information to the second receiving apparatus. Details are not described herein again.

In addition, the first communication apparatus may wake up the first sending apparatus through an internal bus. For example, a processor of the first communication apparatus delivers an adjustment value of a first-type running parameter to the first sending apparatus through the internal bus, so that the first sending apparatus performs adjustment based on the received adjustment value of the first-type running parameter, to restore current link bandwidth from first link bandwidth to the second link bandwidth.

In addition, in this embodiment of this application, some running parameters of a first sub-optical module in the first sending apparatus need to be adaptively adjusted to match a current environment condition, to meet a running indicator of the first sub-optical module to a maximum extent. The environment condition includes, for example, an environment temperature, a component temperature, and a power supply voltage. These running parameters may be referred to as second-type running parameters. To be specific, the second-type running parameter includes a parameter that is in the running parameter of the first sub-optical module of the first sending apparatus and that is related to the running indicator.

Considering that an environment in which the first sending apparatus is located when the first sending apparatus is woken up may be greatly different from an environment in which the first sending apparatus is located when the first sending apparatus is slept, a parameter value needed by the second-type running parameter of the first sub-optical module when the first sending apparatus is woken up also correspondingly changes greatly. Based on this, a target parameter value that is of the second-type running parameter of the first sub-optical module and that matches a wakeup condition during wakeup may be determined.

In other words, in some embodiments, the first communication apparatus obtains the target parameter value of the second-type running parameter of the first sub-optical module, where the second-type running parameter includes the parameter that is in the running parameter of the first sub-optical module and that is related to the running indicator, and the target parameter value of the second-type running parameter matches an environment condition for switching the first sending apparatus from the first running state to the second running state. The first communication apparatus sets the second-type running parameter of the first sub-optical module based on the target parameter value.

For example, the second-type running parameter includes a transmit optical power, semiconductor cooler (thermo electric cooler, TEC) temperature control, a bias current, a voltage, an analog control semaphore, and an adaptation parameter of a sending CDR or a digital signal processor (digital signal processor, DSP). The running indicator is pre-configured by a manufacturer, and indicates an indicator that needs to be met when a first sub-module runs.

For example, the first communication apparatus may obtain the target parameter value of the second-type running parameter of the first sub-optical module in the following implementation: The first communication apparatus obtains a target mapping relationship, where the target mapping relationship indicates a mapping relationship between a parameter value of the second-type running parameter and the environment condition when the running indicator is met; and the first communication apparatus determines the target parameter value of the second-type running parameter based on the target mapping relationship and the environment condition for switching the first sending apparatus from the first running state to the second running state.

The target mapping relationship may be obtained in an online-learning manner, or may be obtained in an offline-learning manner. The following explains and describes the two manners.

### 1. Online parameter learning

For example, the first communication apparatus may learn and record the second-type running parameter of the first sub-optical module online, typically including one or more of the transmit optical power, the TEC temperature control, the bias current, an operating voltage, an analog signal control amount, an adaptation parameter and the like of a received CDR or the DSP, and the corresponding environment condition like the environment temperature and the component temperature, to learn a mapping relationship between the second-type running parameter of the first sub-optical module and the environment condition, that is, the target mapping relationship.

The online learning manner may be implemented by the first communication apparatus in a machine learning manner, or may be implemented in another manner. Examples are not given one by one herein for description.

In addition, the online parameter learning may be completed through a microprocessor (microcontroller unit, MCU) inside the first sub-optical module, or a board-level or system-level main control central processing unit (central processing unit, CPU).

### 2. Offline parameter learning

For example, before the first communication apparatus or the first sub-optical module is delivered from a factory, in a manufacturing phase of the first sub-optical module, different typical environment conditions are constructed, and an optimal parameter value of the second-type running parameter in the different environmental conditions is tested, to learn a mapping relationship between the second-type running parameter of the first sub-optical module and the environment condition, that is, the target mapping relationship. This process is referred to as an offline learning process.

Optionally, the first communication apparatus may obtain the target parameter value of the second-type running parameter of the first sub-optical module in the following implementation: In response to a parameter update instruction, the first communication apparatus adaptively adjusts a parameter value of the second-type running parameter of the first sub-optical module based on the current environment condition and the running indicator, and stores an adjusted parameter value of the second-type running parameter of the first sub-optical module. In this scenario, the target parameter value is a parameter value that is of the second-type running parameter and that is stored last time.

The following explains and describes, by using an example in which an energy-saving policy is implemented through a sleep channel, a process in which in response to the parameter update instruction, the first communication apparatus adaptively adjusts the parameter value of the second-type running parameter of the first sub-optical module based on the current environment condition and the running indicator.

For example, in response to the parameter update instruction, the first communication apparatus may wake up a channel that is in a sleep state and that is in the first sub-optical module, and keep in a wakeup state for specific duration. Then, within the duration, the parameter value of the second-type running parameter of the first sub-optical module is adaptively adjusted based on the current environment condition and the running indicator, so that the parameter value of the second-type running parameter of the first sub-optical module matches the current environment condition. When the duration expires, the channel that is previously in the sleep state continues to be slept.

In addition, the parameter update instruction may be triggered periodically, or may be triggered in response to a specified event. The following explains and describes the two manners.

### 1. Periodic online active triggering

According to a periodic online active wakeup mechanism, it is ensured that the parameter value that is of the second-type running parameter and that is stored by the first communication apparatus when the first sending apparatus is in the first running state matches a latest environment condition, to support fast sleep and wakeup actions that may occur at any time.

For example, after entering the first running state, the first sending apparatus wakes up the first sub-optical module once every hour, so that the first sub-optical module is in a standard operating mode. The first sub-optical module is kept in the standard operating mode for 10 ms, so that the first sub-optical module adaptively adjusts a current parameter value of the second-type running parameter within the 10 ms, and stores an adjusted parameter value of the second-type running parameter. When the first sending apparatus is woken up subsequently by performing step 901, the parameter value that is of the second-type running parameter and that is stored last time is used as the target parameter value.

### 2. Triggering in response to a specified event

To avoid a case in which a periodic online active wakeup mechanism needs a large quantity of operations, it may further be set that active wakeup is performed when an environment condition of a live network changes greatly, to adaptively refresh the parameter value of the second-type running parameter, and ensure that the parameter value that is of the second-type running parameter and that is stored by the first communication apparatus when the first sending apparatus is in the first running state matches a latest environment condition.

For example, after the first sending apparatus enters the first running state, the first communication apparatus may detect the environment temperature. If a difference between a current environment temperature and an environment temperature at which the first sending apparatus is switched to enter the first running state exceeds 40 degrees Celsius, the first sending apparatus is actively woken up, so that the first sub-optical module is in a standard operating mode and the first sub-optical module keeps in the standard operating mode for 10 ms. In this way, the first sub-optical module adaptively adjusts a current parameter value of the second-type running parameter within the 10 ms, and stores an adjusted parameter value of the second-type running parameter. When the first sending apparatus is woken up subsequently by performing step 901, the parameter value that is of the second-type running parameter and that is stored last time is used as the target parameter value.

The foregoing describes the specified event by using the environment temperature as an example. Optionally, the specified event may alternatively be that the power supply voltage exceeds a specific range. The specified event may alternatively be that the environment temperature does not change, but the component temperature exceeds a specific range. Examples are not given one by one herein for description.

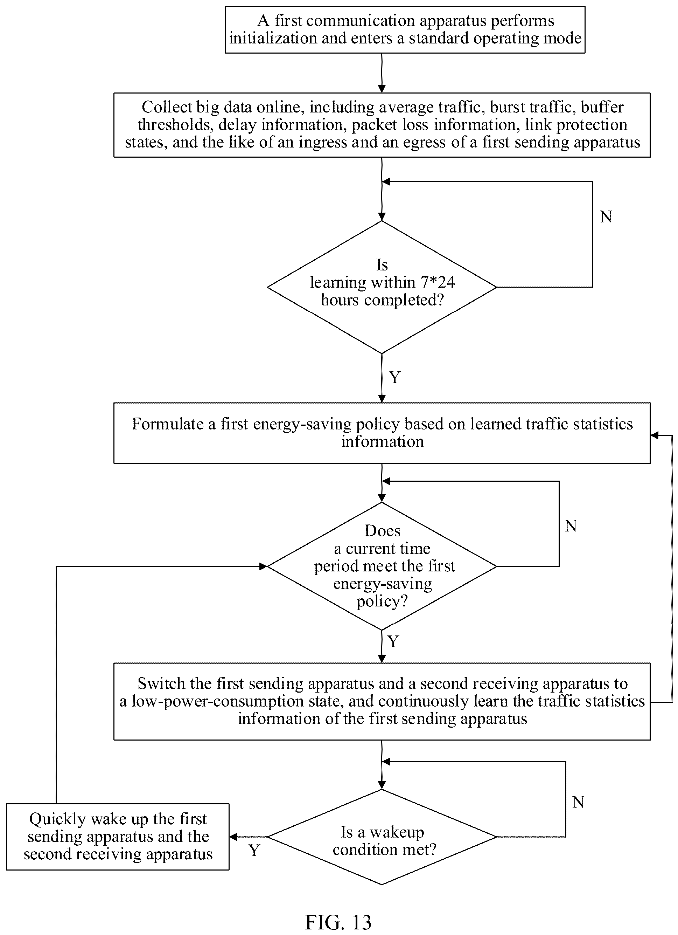

The following describes the embodiments shown in FIG. 4 and FIG. 9 by using FIG. 13 as an example. FIG. 13 does not constitute a limitation on the embodiments shown in FIG. 4 and FIG. 9.

As shown in FIG. 13, a first communication apparatus performs initialization and then enters a standard operating mode, that is, a first sending apparatus operates based on rated bandwidth. In a process in which the first sending apparatus operates based on the rated bandwidth, the first communication apparatus collects big data online. The collected data includes average traffic, burst traffic, buffer thresholds, delay statuses, packet loss statuses, link protection states, and the like of an ingress and an egress of the first sending apparatus, to learn traffic statistics information of the first sending apparatus within recent 7*24 hours in real time. After learning of the traffic statistics information of the first sending apparatus within the recent 7*24 hours is completed, a first energy-saving policy is formulated based on the learned traffic statistics information. In addition, when a current time period meets the determined first energy-saving policy, running states of the first sending apparatus and a second receiving apparatus are switched, so that the first sending apparatus and the second receiving apparatus run in a low-power-consumption state. Then, it is monitored whether a wakeup condition is met. When it is monitored that the wakeup condition is currently met, the first sending apparatus and the second receiving apparatus are quickly woken up.

In addition, as shown in FIG. 13, after the running states of the first sending apparatus and the second receiving apparatus are switched, the traffic statistics information of the first sending apparatus may be further continuously learned, to update the first energy-saving policy based on the learned traffic statistics information.

In addition, it can be learned from related content of a communication system shown in FIG. 3 that in this embodiment of this application, energy-saving policies on transmit and receive links between the first communication apparatus and the second communication apparatus may be asymmetric. Therefore, in some embodiments, the first communication apparatus may further receive second running parameter adjustment information sent by a second communication apparatus. The first communication apparatus sets a first receiving apparatus to be in a third running state based on the second running parameter adjustment information, where when the first receiving apparatus is in a third running state, link bandwidth between the first receiving apparatus and a second sending apparatus is third link bandwidth.

For a specific implementation, refer to the foregoing embodiments. Details are not described herein again.

In conclusion, in this embodiment of this application, the running states of related components at a MAC layer and a physical layer of the first communication apparatus are switched, to implement the energy-saving policy by reducing the link bandwidth, so that power consumption of the first communication apparatus is reduced. In addition, when the first sending apparatus needs to be woken up, the running states of the related components at the MAC layer and the physical layer of the first communication apparatus may be further switched, to implement wakeup by increasing the link bandwidth.

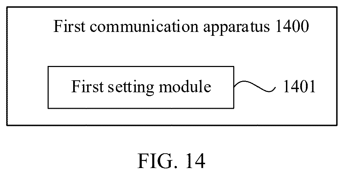

FIG. 14 is a diagram of a structure of a first communication apparatus according to an embodiment of this application. A communication system further includes a second communication apparatus, the first communication apparatus includes a first sending apparatus, the second communication apparatus includes a second receiving apparatus, the first sending apparatus and the second receiving apparatus are interconnected through an optical fiber, and both the first sending apparatus and the second receiving apparatus are configured to perform medium access control MAC layer and physical layer processing on data.

As shown in FIG. 14, the first communication apparatus includes the following modules.
a first setting module 1401, configured to: in response to a current time point being a start time point of a first energy-saving time period, set the first sending apparatus to be in a first running state according to a first energy-saving policy, where when the first sending apparatus is in the first running state, link bandwidth between the first sending apparatus and the second receiving apparatus is first link bandwidth, and the first energy-saving policy includes the first energy-saving time period and the first link bandwidth. For a specific implementation, refer to step 401 in the embodiment in FIG. 4.

Optionally, the first communication apparatus further includes:
a first obtaining module, configured to obtain first running parameter adjustment information corresponding to the first link bandwidth; and
a first sending module, configured to send the first energy-saving time period and the first running parameter adjustment information to the second communication apparatus.

Optionally, the first sending apparatus includes a plurality of channels, and the first running parameter adjustment information includes sleep channel information.

Optionally, the sleep channel information indicates a sleep channel in the plurality of channels in the first running state.

Optionally, the first sending module is configured to:
generate an energy-saving negotiation packet, where the energy-saving negotiation packet carries the first energy-saving time period and the first running parameter adjustment information; and
send the energy-saving negotiation packet to the second receiving apparatus.

Optionally, the first sending module is configured to:
receive a to-be-sent Ethernet frame;
perform MAC layer and physical layer processing on the Ethernet frame, and add the first energy-saving time period and the first running parameter adjustment information to a reference field of a processed packet; and
send the processed packet to the second receiving apparatus.

Optionally, the first communication apparatus further includes:
a buffer module, configured to: before the first communication apparatus sets the first sending apparatus to be in the first running state, buffer a packet to be sent by the first sending apparatus; and
a second sending module, configured to: after the first communication apparatus sets the first sending apparatus to be in the first running state, send the buffered packet through the first sending apparatus.

Optionally, the first setting module is configured to:
set, based on the first link bandwidth, a first-type running parameter of a first module included in the first sending apparatus.

The first module includes a first sub-MAC chip, a first sub-serializer/deserializer SerDes, and a first sub-optical module, and the first-type running parameter includes a parameter that is in a running parameter of the first module and that is related to power consumption.

Optionally, the first communication apparatus further includes:
a switching module, configured to: switch the first sending apparatus from the first running state to a second running state, where when the first sending apparatus is in the second running state, the link bandwidth between the first sending apparatus and the second receiving apparatus is second link bandwidth, and the second link bandwidth is greater than the first link bandwidth.

Optionally, the switching module switches the first sending apparatus from the first running state to the second running state when any one of the following conditions is met:

The current time point reaches an end time point of the first energy-saving time period;
a quantity of packets buffered by the first communication apparatus at the current time point exceeds a reference quantity; or
the first communication apparatus detects, at the current time point, that a second link that is a mutual protection link with a first link is faulty, where the first link is a link between the first sending apparatus and the second receiving apparatus.

Optionally, the first sending apparatus includes the first sub-optical module. The first communication apparatus further includes:
a second obtaining module, configured to obtain a target parameter value of a second-type running parameter of the first sub-optical module, where the second-type running parameter includes a parameter that is in a running parameter of the first sub-optical module and that is related to a running indicator, and the target parameter value matches an environment condition for switching the first sending apparatus from the first running state to the second running state; and
a second setting module, configured to set the second-type running parameter of the first sub-optical module based on the target parameter value.

Optionally, the second obtaining module is configured to:
obtain a target mapping relationship, where the target mapping relationship indicates a mapping relationship between a parameter value of the second-type running parameter and the environment condition when the running indicator is met; and
determine the target parameter value of the second-type running parameter based on the target mapping relationship and the environment condition for switching the first sending apparatus from the first running state to the second running state.

Optionally, the first communication apparatus further includes:
a storage module, configured to: in response to a parameter update instruction, adaptively adjust a parameter value of the second-type running parameter of the first sub-optical module based on a current environment condition and the running indicator, and store an adjusted parameter value of the second-type running parameter of the first sub-optical module, where
the target parameter value is a parameter value that is of the second-type running parameter and that is stored last time.

Optionally, the first energy-saving policy is related to traffic statistics information within reference duration that is before the current time point and that is distant from the current time point, and the traffic statistics information includes one or more of average traffic, burst traffic, delay information, and packet loss information that are of the first communication apparatus and that are within the reference duration that is before the current time point and that is distant from the current time point.

Optionally, the first communication apparatus further includes a first receiving apparatus, the second communication apparatus further includes a second sending apparatus, and the second sending apparatus is interconnected with the first receiving apparatus through the optical fiber. The first communication apparatus further includes:
a receiving module, configured to receive second running parameter adjustment information sent by the second communication apparatus; and
a third setting module, configured to set the first receiving apparatus to be in a third running state based on the second running parameter adjustment information, where when the first receiving apparatus is in the third running state, link bandwidth between the first receiving apparatus and the second sending apparatus is third link bandwidth.

In conclusion, in this embodiment of this application, the running states of related components at a MAC layer and a physical layer of the first communication apparatus are switched, to implement the energy-saving policy by reducing the link bandwidth, so that power consumption of the first communication apparatus is reduced. In addition, when the first sending apparatus needs to be woken up, the running states of the related components at the MAC layer and the physical layer of the first communication apparatus may be further switched, to implement wakeup by increasing the link bandwidth.

It should be noted that, when the first communication apparatus provided in the foregoing embodiment determines the running state, division of the foregoing functional modules is only used as an example for description. In actual application, the foregoing functions may be allocated to different functional modules for implementation as needed, that is, an inner structure of a device is divided into different functional modules, to implement all or some of the functions described above. In addition, the first communication apparatus provided in the foregoing embodiment and the method embodiment for determining the running state belong to a same concept. For a specific implementation process of the first communication apparatus, refer to the method embodiment. Details are not described herein again.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state disk, SSD)), or the like.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, an optical disc, or the like.

The foregoing descriptions are embodiments provided in this application, but are not intended to limit embodiments of this application. Any modification, equivalent replacement, or improvement made without departing from the spirit and principle of embodiments of this application shall fall within the protection scope of embodiments of this application.

## Claims

1. A method for determining a running state, wherein the method is applied to a communication system, the communication system comprises a first communication apparatus and a second communication apparatus, the first communication apparatus comprises a first sending apparatus, the second communication apparatus comprises a second receiving apparatus, the first sending apparatus and the second receiving apparatus are interconnected through an optical fiber, and both the first sending apparatus and the second receiving apparatus are configured to perform medium access control MAC layer and physical layer processing on data; and the method comprises:
in response to a current time point being a start time point of a first energy-saving time period, setting, by the first communication apparatus, the first sending apparatus to be in a first running state according to a first energy-saving policy, wherein when the first sending apparatus is in the first running state, link bandwidth between the first sending apparatus and the second receiving apparatus is first link bandwidth, and the first energy-saving policy comprises the first energy-saving time period and the first link bandwidth.

2. The method according to claim 1, wherein before setting, by the first communication apparatus, the first sending apparatus to be in the first running state, the method further comprises:
obtaining, by the first communication apparatus, first running parameter adjustment information corresponding to the first link bandwidth; and
sending, by the first communication apparatus, the first energy-saving time period and the first running parameter adjustment information to the second communication apparatus.

3. The method according to claim 2, wherein the first sending apparatus comprises a plurality of channels, and the first running parameter adjustment information comprises sleep channel information.

4. The method according to claim 3, wherein the sleep channel information indicates a sleep channel in the plurality of channels in the first running state.

5. The method according to any one of claims 2 to 4, wherein
sending, by the first communication apparatus, the first energy-saving time period and the first running parameter adjustment information to the second communication apparatus comprises:
generating an energy-saving negotiation packet, wherein the energy-saving negotiation packet carries the first energy-saving time period and the first running parameter adjustment information; and
sending the energy-saving negotiation packet to the second receiving apparatus.

6. The method according to any one of claims 2 to 4, wherein
sending, by the first communication apparatus, the first energy-saving time period and the first running parameter adjustment information to the second communication apparatus comprises:
receiving, by the first sending apparatus, a to-be-sent Ethernet frame;
performing, by the first sending apparatus, MAC layer and physical layer processing on the Ethernet frame, and adding the first energy-saving time period and the first running parameter adjustment information to a reference field of a processed packet; and
sending, by the first sending apparatus, the processed packet to the second receiving apparatus.

7. The method according to any one of claims 1 to 6, wherein the method further comprises:
before setting, by the first communication apparatus, the first sending apparatus to be in the first running state, buffering, by the first communication apparatus, a packet to be sent by the first sending apparatus; and
after setting, by the first communication apparatus, the first sending apparatus to be in the first running state, sending, by the first communication apparatus, the buffered packet through the first sending apparatus.

8. The method according to any one of claims 1 to 7, wherein setting, by the first communication apparatus, the first sending apparatus to be in the first running state comprises:
setting, by the first communication apparatus based on the first link bandwidth, a first-type running parameter of a first module comprised in the first sending apparatus, wherein
the first module comprises a first sub-MAC chip, a first sub-serializer/deserializer SerDes, and a first sub-optical module, and the first-type running parameter comprises a parameter that is in a running parameter of the first module and that is related to power consumption.

9. The method according to any one of claims 1 to 8, wherein after setting, by the first communication apparatus, the first sending apparatus to be in the first running state, the method further comprises:
switching, by the first communication apparatus, the first sending apparatus from the first running state to a second running state, wherein when the first sending apparatus is in the second running state, the link bandwidth between the first sending apparatus and the second receiving apparatus is second link bandwidth, and the second link bandwidth is greater than the first link bandwidth.

10. The method according to claim 9, wherein the method further comprises:
switching, by the first communication apparatus, the first sending apparatus from the first running state to the second running state when any one of the following conditions is met:
the current time point reaches an end time point of the first energy-saving time period;
a quantity of packets buffered by the first communication apparatus at the current time point exceeds a reference quantity; or
the first communication apparatus detects, at the current time point, that a second link that is a mutual protection link with a first link is faulty, wherein the first link is a link between the first sending apparatus and the second receiving apparatus.

11. The method according to claim 9 or 10, wherein the first sending apparatus comprises the first sub-optical module; and the method further comprises:
obtaining, by the first communication apparatus, a target parameter value of a second-type running parameter of the first sub-optical module, wherein the second-type running parameter comprises a parameter that is in a running parameter of the first sub-optical module and that is related to a running indicator, and the target parameter value matches an environment condition for switching the first sending apparatus from the first running state to the second running state; and
setting, by the first communication apparatus, the second-type running parameter of the first sub-optical module based on the target parameter value.

12. The method according to claim 11, wherein obtaining, by the first communication apparatus, the target parameter value of the second-type running parameter of the first sub-optical module comprises:
obtaining, by the first communication apparatus, a target mapping relationship, wherein the target mapping relationship indicates a mapping relationship between a parameter value of the second-type running parameter and the environment condition when the running indicator is met; and
determining, by the first communication apparatus, the target parameter value of the second-type running parameter based on the target mapping relationship and the environment condition for switching the first sending apparatus from the first running state to the second running state.

13. The method according to claim 11, wherein the method further comprises:
in response to a parameter update instruction, adaptively adjusting, by the first communication apparatus, a parameter value of the second-type running parameter of the first sub-optical module based on a current environment condition and the running indicator, and storing an adjusted parameter value of the second-type running parameter of the first sub-optical module, wherein
the target parameter value is a parameter value that is of the second-type running parameter and that is stored last time.

14. The method according to any one of claims 1 to 13, wherein the first energy-saving policy is related to traffic statistics information within reference duration that is before the current time point and that is distant from the current time point, and the traffic statistics information comprises one or more of average traffic, burst traffic, delay information, and packet loss information that are of the first communication apparatus and that are within the reference duration that is before the current time point and that is distant from the current time point.

15. The method according to any one of claims 1 to 14, wherein the first communication apparatus further comprises a first receiving apparatus, the second communication apparatus further comprises a second sending apparatus, and the second sending apparatus and the first receiving apparatus are interconnected through an optical fiber; and the method further comprises:
receiving, by the first communication apparatus, second running parameter adjustment information sent by the second communication apparatus; and
setting, by the first communication apparatus, the first receiving apparatus to be in a third running state based on the second running parameter adjustment information, wherein when the first receiving apparatus is in the third running state, link bandwidth between the first receiving apparatus and the second sending apparatus is third link bandwidth.

16. A communication apparatus, wherein the communication apparatus is a first communication apparatus in a communication system, the communication system further comprises a second communication apparatus, the first communication apparatus comprises a first sending apparatus, the second communication apparatus comprises a second receiving apparatus, the first sending apparatus and the second receiving apparatus are interconnected through an optical fiber, and both the first sending apparatus and the second receiving apparatus are configured to perform medium access control MAC layer and physical layer processing on data; and the first communication apparatus comprises:
a first setting module, configured to: in response to a current time point being a start time point of a first energy-saving time period, set the first sending apparatus to be in a first running state according to a first energy-saving policy, wherein when the first sending apparatus is in the first running state, link bandwidth between the first sending apparatus and the second receiving apparatus is first link bandwidth, and the first energy-saving policy comprises the first energy-saving time period and the first link bandwidth.

17. The communication apparatus according to claim 16, wherein the first communication apparatus further comprises:
a first obtaining module, configured to obtain first running parameter adjustment information corresponding to the first link bandwidth; and
a first sending module, configured to send the first energy-saving time period and the first running parameter adjustment information to the second communication apparatus.

18. The communication apparatus according to claim 17, wherein the first sending apparatus comprises a plurality of channels, and the first running parameter adjustment information comprises sleep channel information.

19. The communication apparatus according to claim 18, wherein the sleep channel information indicates a sleep channel in the plurality of channels in the first running state.

20. The communication apparatus according to any one of claims 17 to 19, wherein the first sending module is configured to:
generate an energy-saving negotiation packet, wherein the energy-saving negotiation packet carries the first energy-saving time period and the first running parameter adjustment information; and
send the energy-saving negotiation packet to the second receiving apparatus.

21. The communication apparatus according to any one of claims 17 to 19, wherein the first sending module is configured to:
receive a to-be-sent Ethernet frame;
perform MAC layer and physical layer processing on the Ethernet frame, and add the first energy-saving time period and the first running parameter adjustment information to a reference field of a processed packet; and
send the processed packet to the second receiving apparatus.

22. The communication apparatus according to any one of claims 16 to 21, wherein the first communication apparatus further comprises:
a buffer module, configured to: before the first communication apparatus sets the first sending apparatus to be in the first running state, buffer a packet to be sent by the first sending apparatus; and
a second sending module, configured to: after the first communication apparatus sets the first sending apparatus to be in the first running state, send the buffered packet through the first sending apparatus.

23. The communication apparatus according to any one of claims 16 to 22, wherein the first setting module is configured to:
set, based on the first link bandwidth, a first-type running parameter of a first module comprised in the first sending apparatus, wherein
the first module comprises a first sub-MAC chip, a first sub-serializer/deserializer SerDes, and a first sub-optical module, and the first-type running parameter comprises a parameter that is in a running parameter of the first module and that is related to power consumption.

24. The communication apparatus according to any one of claims 16 to 23, wherein the first communication apparatus further comprises:
a switching module, configured to: switch the first sending apparatus from the first running state to a second running state, wherein when the first sending apparatus is in the second running state, the link bandwidth between the first sending apparatus and the second receiving apparatus is second link bandwidth, and the second link bandwidth is greater than the first link bandwidth.

25. The communication apparatus according to claim 24, wherein the switching module switches the first sending apparatus from the first running state to the second running state when any one of the following conditions is met:
the current time point reaches an end time point of the first energy-saving time period;
a quantity of packets buffered by the first communication apparatus at the current time point exceeds a reference quantity; or
the first communication apparatus detects, at the current time point, that a second link that is a mutual protection link with a first link is faulty, wherein the first link is a link between the first sending apparatus and the second receiving apparatus.

26. The communication apparatus according to claim 24 or 25, wherein the first sending apparatus comprises the first sub-optical module; and the first communication apparatus further comprises:
a second obtaining module, configured to obtain a target parameter value of a second-type running parameter of the first sub-optical module, wherein the second-type running parameter comprises a parameter that is in a running parameter of the first sub-optical module and that is related to a running indicator, and the target parameter value matches an environment condition for switching the first sending apparatus from the first running state to the second running state; and
a second setting module, configured to set the second-type running parameter of the first sub-optical module based on the target parameter value.

27. The communication apparatus according to claim 26, wherein the second obtaining module is configured to:
obtain a target mapping relationship, wherein the target mapping relationship indicates a mapping relationship between a parameter value of the second-type running parameter and the environment condition when the running indicator is met; and
determine the target parameter value of the second-type running parameter based on the target mapping relationship and the environment condition for switching the first sending apparatus from the first running state to the second running state.

28. The communication apparatus according to claim 26, wherein the first communication apparatus further comprises:
a storage module, configured to: in response to a parameter update instruction, adaptively adjust a parameter value of the second-type running parameter of the first sub-optical module based on a current environment condition and the running indicator, and store an adjusted parameter value of the second-type running parameter of the first sub-optical module, wherein
the target parameter value is a parameter value that is of the second-type running parameter and that is stored last time.

29. The communication apparatus according to any one of claims 16 to 28, wherein the first energy-saving policy is related to traffic statistics information within reference duration that is before the current time point and that is distant from the current time point, and the traffic statistics information comprises one or more of average traffic, burst traffic, delay information, and packet loss information that are of the first communication apparatus and that are within the reference duration that is before the current time point and that is distant from the current time point.

30. The communication apparatus according to any one of claims 16 to 29, wherein the first communication apparatus further comprises a first receiving apparatus, the second communication apparatus further comprises a second sending apparatus, and the second sending apparatus and the first receiving apparatus are interconnected through an optical fiber; and the first communication apparatus further comprises:
a receiving module, configured to receive second running parameter adjustment information sent by the second communication apparatus; and
a third setting module, configured to set the first receiving apparatus to be in a third running state based on the second running parameter adjustment information, wherein when the first receiving apparatus is in the third running state, link bandwidth between the first receiving apparatus and the second sending apparatus is third link bandwidth.

31. A communication apparatus, wherein the communication apparatus comprises a processor, wherein
the memory is configured to: store a program that supports the apparatus in performing the method according to any one of claims 1 to 15, and store data mentioned for implementing the method according to any one of claims 1 to 15; and
the processor is configured to execute the program to support the apparatus in performing a program of the method according to any one of claims 1 to 15.

32. A computer-readable storage medium, wherein the computer-readable storage medium stores instructions, and when the instructions are run on a communication apparatus, the communication apparatus is enabled to perform the method according to any one of claims 1 to 15.
